# EUROPEAN PATENT APPLICATION

(11) **EP 1 919 014 A1**
(43) Date of publication of application: **07.05.2008**
(21) Application number: 06746834.8
(22) Date of filing: 25.05.2006
(51) Int. Cl.: H01M 8/02, B28B 3/08, C01B 31/04, H01M 8/10

(54) **MOLDING DIE FOR FUEL CELL SEPARATOR, METHOD OF MANUFACTURING FUEL CELL SEPARATOR, AND FUEL CELL SEPARATOR**

(30) Priority: 25.05.2005 JP 2005152879; 02.08.2005 JP 2005224512; 24.05.2006 JP 2006143956
(71) Applicant: SEIKOH GIKEN CO., LTD., Matsudo-shi, Chiba 270-2214 (JP)
(72) Inventor: ARAMAKI, Hiromasa, Chiba 270-2214 (JP); SUZUKI, Masami, Chiba 270-2214 (JP)
(74) Representative: Grünecker, Kinkeldey, Stockmair & Schwanhäusser Anwaltssozietät
(86) International application number: PCT/JP2006/310455
(87) International publication number: WO 2006/126638

(57) **Abstract**

To obtain a fuel cell bipolar plate of high quality and high productivity with less deformation, warpage, and cracking at the time of product removal from a die by making equal the density balance between a gas flow passage groove part area and a surrounding part area on the surface of the bipolar plate.

A (upper) lower inner die (42,) 22 is positioned at a prescribed height (under or) above a (upper) lower outer die (45,) 25 so that the compression ratio of a flow passage groove part 2 and the compression ratio of a surrounding part 4 are equal when a cavity 50 formed between upper and lower dies 41 and 21 divided into the upper and lower inner dies 42 and 22 corresponding to the flow passage groove part 2 and the upper and lower outer dies 45 and 25 corresponding to a surrounding part 4, respectively, is filled with a powder-like material. The upper and lower outer dies 45 and 25 are projected with respect to the upper and lower inner dies 42 and 22 so that the flow passage groove part 2 is released from the die preceding to the surrounding part 4 on each of the front and rear surfaces at the time of die opening for molded product removal after compression molding.

## Description

### TECHNICAL FIELD

The present invention generally relates to a method of manufacturing a fuel cell bipolar plate, and, more particularly to a molding die for obtaining a fuel cell bipolar plate by compression molding using a material including carbon quality powder poor in flowability as a principal component, a manufacturing method of the same, and a fuel cell bipolar plate.

### BACKGROUND ART

The practical use of a power generation system by a fuel cell has been widely discussed and promoted as a clean, highly efficient, novel technique to solve the problem of an increase in the amount of carbon-dioxide emissions and the problem of exhaustion of resources including fossil fuel as well as petroleum accompanying a recent increase in the amount of energy consumption.

In particular, a PEFC (Polymer Electrolyte Fuel Cell) system that uses an ion exchange membrane as an electrolyte has a comparatively low operating temperature as low as 80°C or less, and therefore its operation and termination are easy. In addition, because of its high energy efficiency, its introduction to home cogeneration, automobiles, mobile appliances or the like is expected.

A basic cell used in a polymer electrolyte fuel cell has a configuration in which an electrolyte film including an ion exchange membrane is sandwiched by an anode (fuel pole) and a cathode (air pole) to form a membrane electrode assembly (MEA) and the MEA is sandwiched by two bipolar plates from both sides.

On the bipolar plate surface, flow passage grooves for supplying a fuel gas, such as hydrogen etc., to the anode (fuel pole) of the MEA and for supplying an oxidizing gas, such as oxygen, air, etc., to the cathode (air pole) are formed, respectively. There can be a case where a refrigerant flow passage for causing a refrigerant to flow is formed. Further, a bipolar plate has a function as a shielding plate for separating a fuel gas and an oxidizing gas.

Tens to hundreds of basic cells are laminated in series and configured as a stack according to the electric output required for the fuel cell system.

The typical characteristics required for the bipolar plate having the above function include an electric resistance of 20 mΩ·cm or less and a gas permeability of 2×10⁻⁶ cc/cm².sec.atm or less on the basis of the target values of the U.S. Department of Energy (DOE), and thinness and lightness, and a drastic reduction in the manufacturing cost is required for the spread in the market.

Initially, such an inexpensive bipolar plate having all the properties was baked and carbonized at high temperatures of 1,000°C or higher for a long time in a non-oxidizing atmosphere after mixing a carbon quality material with a thermosetting resin binder and molding and heating it to harden.

The mold product obtained by such a method has a plate-like shape, and therefore, there used to be a problem in that cutting work for a gas flow passage groove, gas introduction hole, stack hole, etc., is required, resulting in a considerably high cost.

In contrast, a method, in which a graphite powder-like material excellent in conductivity is mixed with a resin base binder and a flow passage groove shape and a hole shape are molded by compression molding using a die capable of molding them, has attracted attention as a manufacturing method capable of reducing costs because it satisfies various characteristics required for a bipolar plate and it does not require cutting work.

There are known a fuel cell bipolar plate and a manufacturing method of a molded product such as described in Japanese Patent Application Laid-open No. 2004-235137, a press-molding method of fine particles, a manufacturing method of a fuel cell bipolar plate, and a fuel cell bipolar plate such as described in Japanese Patent Application Laid-open No. 2004-22207, and a manufacturing method of a polymer electrolyte fuel cell molding bipolar plate such as described in Japanese Patent Application Laid-open No. 2004-235069.

### DISCLOSURE OF THE INVENTION

It is necessary, however, for the graphite blend ratio to be 75 wt% or higher in order to obtain a high conductivity, and therefore the flowability of the material is degraded considerably. As a result, there arise problems as described below in the case of compression molding for molding various shapes required for a bipolar plate.

A bipolar plate has a gas flow passage groove part and a surrounding part therearound on its surface, however, the density of the gas flow passage groove part and that of the surrounding part are not equal. In other words, the compression ratio of the material of the gas flow passage groove part is high and the compression ratio of the material of the surrounding part is low. Because of this, the density of graphite in the surrounding part is lower than that in the gas flow passage groove part, and therefore the conductivity falls and the gas permeability increases.

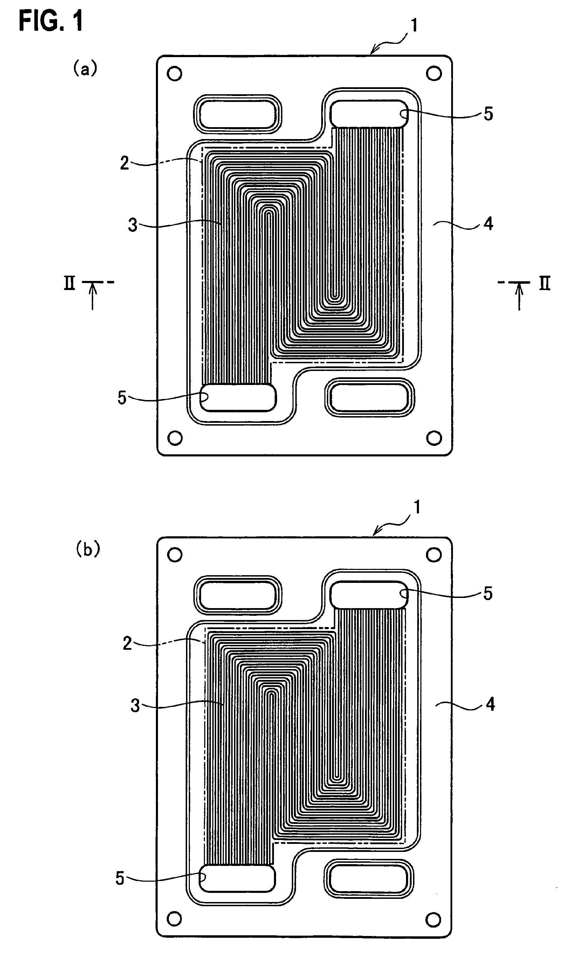

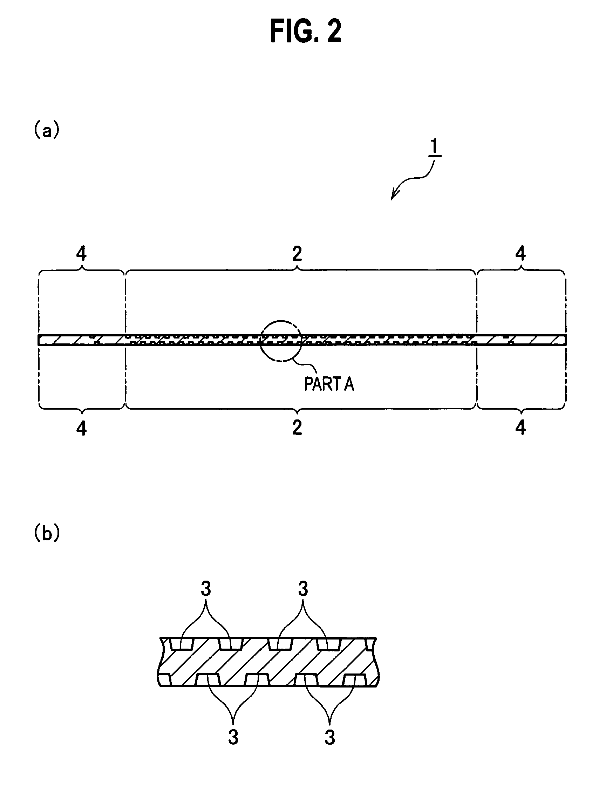

An example of a general bipolar plate is shown in Figs. 1 and its sectional view is shown in Figs. 2. Although Figs. 1 and Figs. 2 show an embodiment of a fuel bipolar plate according to the present invention, it is a general shape of a bipolar plate, and therefore a general bipolar plate is explained here using the shape shown schematically.

In order to improve a high conductivity required for a bipolar plate, it is important to obtain a density as close to a density of 2.1 g/cm³ of 100% graphite as possible. If it is assumed that the bulk density of a powder-like material with a blend ratio of graphite 80 wt% and phenol resin 20 wt% is 0.65 g/cm³, and the target density of product is 1.95 g/cm³, the compression ratio at the time of compression molding is 3. If the thickness of a product is 2 mm, the thickness of the powder-like material with which a die is filled is 6 mm because the compression ratio is 3.

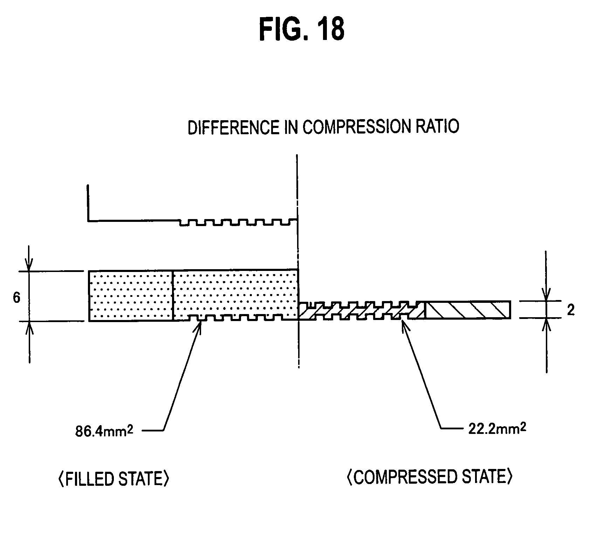

As shown in an example in Fig. 18, when the compression ratio of the surrounding part area is set to 3, the cross sectional area of the area that forms the gas flow passage groove part changes from 86.4 mm² when filled to 22.2 mm² when compressed by 4 mm by press stroke with the compression ratio 3, and the compression ratio of the gas flow passage groove part on the basis of the cross sectional area is 3.9, a compression ratio 30% excessive with respect to the surrounding part area. This phenomenon becomes more remarkable with an increasing cross sectional area of the gas flow passage groove part and with a decreasing thickness of the product.

The fundamental cause of the difference between the compression ratios resulting from the sectional profile of the product is that there is almost no flow of the material in the direction transverse to the direction of compression due to the poor flowability of the powder-like material.

On the other hand, there arises a problem such that described below at the time of die release after the product is molded by compression molding.

In order to increase the density of graphite, molding is carried out with a press pressure of about 30 MPa or higher. Because of this, there remains a high compression stress in the molded product in the die and after released from the die, it expands because the stress is released. This phenomenon is called a spring back and this causes warpage and deformation to occur and defects to occur, such as cracking and chipping due to an increase in the die release resistance of the gas flow passage groove part. In particular, when the product is thin and the gas flow passage is deep, this becomes more remarkable.

As described above, under the present circumstances, the molding tends to become more difficult while maintaining a high conductivity required for the bipolar plate because the product becomes thinner, the gas flow passage becomes narrower, the groove becomes deeper, etc., and it is desired to construct another technique for manufacture by compression molding.

The present invention has been achieved to solve the above problems and an object thereof is to provide a molding die for a fuel cell bipolar plate, a method of manufacturing a fuel cell bipolar plate, and a fuel cell bipolar plate, the fuel cell bipolar plate being capable of providing high quality and high productivity with less deformation, warpage, and cracking even when it is removed from the die by keeping equal the density balance between a gas flow passage groove part area and a surrounding part area on the surface of the bipolar plate by employing an appropriate die molding process in a method of manufacturing a bipolar plate by compression molding using a powder-like material with a high graphite content and poor in flowability.

A first aspect of the present invention provides a molding die for compression-molding a fuel cell bipolar plate, wherein the fuel cell bipolar plate has a flow passage groove portion and a surrounding portion on at least one surface thereof and is made of a powder-like material, comprising: a lower die, in opposition to said one surface, divided into an inner die corresponding to said flow passage groove portion and an outer die corresponding to said surrounding portion; and an actuating member advancing and retracting said inner die and/or said outer die.

A second aspect of the present invention provides a molding die for compression-molding a fuel cell bipolar plate, wherein the fuel cell bipolar plate has a flow passage groove portion and a surrounding portion on each of the front and rear surfaces and is made of a powder-like material, comprising: an upper die being divided into an upper inner die corresponding to said flow passage groove portion and an upper outer die corresponding to said surrounding portion; an lower die being divided into a lower inner die corresponding to said flow passage groove portion and a lower outer die corresponding to said surrounding portion; either of the upper die or the lower die being actuated by a ram pressure, a frame body forming the periphery of a cavity between said upper die and said lower die; an actuating member advancing and retracting said upper outer die with respect to said upper inner die; and an actuating member advancing and retracting said lower inner die and said lower outer die reciprocally.

A third aspect of the present invention provides a manufacturing method of a fuel cell bipolar plate having a flow passage groove portion and a surrounding portion on at least one surface by compression-molding a powder-like material using a die, wherein an inner die is positioned at a predetermined height above an outer die so that the compression ratio of said flow passage groove portion and the compression ratio of said surrounding portion are equal when a cavity formed between an upper die and a lower die, divided into said inner die corresponding to said flow passage groove portion and said outer die corresponding to said surrounding portion, is filled with a powder-like material.

A fourth aspect of the present invention provides a manufacturing method of a fuel cell bipolar plate having a flow passage groove portion and a surrounding portion on at least one surface by compression-molding a powder-like material using a die, wherein an outer die is projected with respect to an inner die so that said flow passage groove portion is released preceding to said surrounding portion at the time of die opening for molded product removal after the compression molding carried out by one of the dies and the other in opposition to said one surface, divided into said inner die corresponding to said flow passage groove portion and said outer die corresponding to said surrounding portion.

A fifth aspect of the present invention provides a manufacturing method of a fuel cell bipolar plate having a flow passage groove portion and a surrounding portion on at least one surface by compression-molding a powder-like material using a die, wherein an outer die is projected with respect to an inner die so that said flow passage groove portion is released preceding to said surrounding portion at the time of die opening for molded product removal after the compression molding carried out by one of the dies, the other in opposition to said one surface, divided into said inner die corresponding to said flow passage groove portion and said outer die corresponding to said surrounding portion, and a frame body that forms the periphery of a cavity between both said dies, and wherein said frame body is moved so that the periphery of the molded product is released from said frame body in a state in which said flow passage groove portion is released and said surrounding portion is not released.

A sixth aspect of the present invention provides a manufacturing method of a fuel cell bipolar plate having a flow passage groove portion and a surrounding portion on each of the front and rear surfaces by compression-molding a powder-like material using a die, wherein a lower inner die is positioned at a predetermined height above a lower outer die so that the compression ratio of said flow passage groove portion and the compression ratio of said surrounding portion are equal when a cavity formed between an upper die, divided into an upper inner die corresponding to said flow passage groove portion and an upper outer die corresponding to said surrounding portion, and a lower die, divided into said lower inner die corresponding to said flow passage groove portion and said lower outer die corresponding to said surrounding portion, is filled with a powder-like material, and wherein a difference in height of said lower inner die from said lower outer die due to said positioning is canceled out substantially at the same time when a die operation is completed by gradually reducing the difference during the period of the die operation for compression.

A seventh aspect of the present invention provides a manufacturing method of a fuel cell bipolar plate having a flow passage groove portion and a surrounding portion on each of the front and rear surfaces by compression-molding a powder-like material using a die, wherein a lower inner die is first positioned at a predetermined height above a lower outer die so that the compression ratio of said flow passage groove portion and the compression ratio of said surrounding portion are equal when a cavity formed between an upper die, divided into an upper inner die corresponding to said flow passage groove portion and an upper outer die corresponding to said surrounding portion, and a lower die, divided into said lower inner die corresponding to said flow passage groove portion and said lower outer die corresponding to said surrounding portion, is filled with a powder-like material, and wherein when said upper die, in which said upper inner die is projected downward by a predetermined amount with respect to said upper outer die, is lowered until the lower surface of said upper outer die comes into contact with the top surface of said powder-like material, filled in the cavity in a state in which said positioning has been carried out, said lower inner die is lowered, following the invasion of said upper inner die into said powder-like material, and positioned so that the amount of upward projection of said lower inner die with respect to said lower outer die is equal to the amount of downward projection of said upper inner die with respect to said upper outer die.

An eighth aspect of the present invention provides a manufacturing method of a fuel cell bipolar plate having a flow passage groove portion and a surrounding portion on each of the front and rear surfaces by compression-molding a powder-like material using a die, wherein an upper outer die and an lower outer die are projected with respect to an upper inner die and an lower inner die so that said flow passage groove portion is released preceding to said surrounding portion at the time of die opening for molded product removal after the compression- molding carried out by an upper die, divided into said upper inner die corresponding to said flow passage groove portion and said upper outer die corresponding to said surrounding portion, and a lower die, divided into said lower inner die corresponding to said flow passage groove portion and said lower outer die corresponding to said surrounding portion.

A ninth aspect of the present invention provides a fuel cell bipolar plate having a flow passage groove portion and a surrounding portion on at least one surface, wherein said fuel cell bipolar plate is formed in such a manner that the material density of said flow passage groove portion is substantially equal with that of said surrounding portion.

A tenth aspect of the present invention provides a fuel cell bipolar plate having a flow passage groove portion and a surrounding portion on at least one surface, wherein said fuel cell bipolar plate is compression-molded in such a manner that the compression ratio of said flow passage groove portion and the compression ratio of said surrounding portion are substantially equal by filling a cavity formed by a lower die being divided, in which an inner die corresponding to said flow passage groove portion is positioned at a predetermined height above an outer die corresponding to said surrounding portion, with a powder-like material and canceling out a difference in height between said outer die and said inner die as a process for compression progresses.

An eleventh aspect of the present invention provides a fuel cell bipolar plate having a both-surfaces flow passage groove portion, a one-surface flow passage groove portion, and a surrounding portion on the front and rear surfaces, wherein said fuel cell bipolar plate is formed in such a manner that the material density of said both-surfaces flow passage groove portion, the material density of said one-surface flow passage groove portion, and the material density of said surrounding portion are substantially equal.

A twelfth aspect of the present invention provides a fuel cell bipolar plate having a both-surfaces flow passage groove portion, a one-surface flow passage groove portion, and a surrounding portion on the front and rear surfaces, wherein said fuel cell bipolar plate is compression-molded in such a manner that the compression ratio of said flow passage groove portion and the compression ratio of said surrounding portion are equal by filling a cavity formed by a lower die, in which a lower inner die corresponding to said both-surfaces flow passage groove portion and said one-surface flow passage groove portion is projected upward by a predetermined amount with respect to a lower outer die corresponding to said surrounding portion, and an upper die, in which an upper inner die corresponding to said both-surfaces flow passage groove portion and said one-surface flow passage groove portion is projected downward by a predetermined amount with respect to an upper outer die corresponding to said surrounding portion, with a powder-like material and by canceling out the projection of said lower inner die and said upper inner die as a process for compression progresses.

### BRIEF DESCRIPTION OF THE DRAWINGS

[Figs. 1] Figs. 1 are (a) a front view and (b) a rear view showing an embodiment of a fuel cell bipolar plate according to the present invention.
[Figs. 2] Figs. 2 are (a) a sectional view taken along a line II-II in Figs. 1 and (b) an enlarged view of a part A.
[Fig. 3] Fig. 3 is a longitudinal sectional view showing a first embodiment of a molding die of a fuel cell bipolar plate according to the present invention.
[Fig. 4] Fig. 4 is a longitudinal sectional view of relevant parts showing a state in which a cavity of a molding die is filled with a powder-like material.
[Fig. 5] Fig. 5 is a longitudinal sectional view of a bipolar plate, which is a compression-molded product.
[Fig. 6] Fig. 6 is a longitudinal sectional view showing a state before filling adjustment in a process for compression molding in a method of manufacturing a fuel cell bipolar plate according to the present invention.
[Fig. 7] Fig. 7 is a longitudinal sectional view showing a state after filling adjustment and immediately before compression in the process for compression molding.
[Fig. 8] Fig. 8 is a longitudinal sectional view showing a state in the middle of a compression process in the process for compression molding.
[Fig. 9] Fig. 9 is a longitudinal sectional view showing a state in which compression is completed in the process for compression molding.
[Fig. 10] Fig. 10 is a longitudinal sectional view showing a state immediately before removal in a process for removing a product after molding.
[Fig. 11] Fig. 11 is a longitudinal sectional view showing a state in which a flow passage groove part is pulled out in the process for removing a product after molding.
[Fig. 12] Fig. 12 is a longitudinal sectional view showing a state in which a die is lowered in the process for removing a product after molding.
[Fig. 13] Fig. 13 is a longitudinal sectional view showing a state in which a die opening is completed in the process for removing a product after molding.
[Fig. 14] Fig. 14 is a graph showing the quality of a fuel cell bipolar plate manufactured according to the present invention.
[Fig. 15] Fig. 15 is a state diagram of the fuel cell bipolar plate in Fig. 14.
[Fig. 16] Fig. 16 is a graph showing the quality of a fuel cell bipolar plate manufactured by a conventional technique.
[Fig. 17] Fig. 17 is a state diagram of the fuel cell bipolar plate in Fig. 16.
[Fig. 18] Fig. 18 is a schematic diagram showing a cross sectional area when filled and a cross sectional area after compressed in conventional compression molding.
[Figs. 19] Figs. 19 are (a) a front view and (b) a rear view showing another embodiment of a fuel cell bipolar plate according to the present invention.
[Fig. 20] Fig. 20 is a sectional view taken along a line XX-XX in Figs. 19.
[Figs. 21] Figs. 21 are (a) an enlarged view of the part A, (b) an enlarged view of a part B, and (c) an enlarged view of a part C in Fig. 20.
[Fig. 22] Fig. 22 is a longitudinal sectional view showing a second embodiment of a molding die of a fuel cell bipolar plate according to the present invention.
[Fig. 23] Fig. 23 is a longitudinal sectional view of relevant parts showing a state in which a cavity of a molding die is filled with a powder-like material.
[Fig. 24] Fig. 24 is a longitudinal sectional view of a bipolar plate, which is a compression-molded product.
[Fig. 25] Fig. 25 is a longitudinal sectional view showing a state before filling adjustment in a process for compression molding in a method of manufacturing a fuel cell bipolar plate according to the present invention.
[Fig. 26] Fig. 26 is a longitudinal sectional view showing a state after filling adjustment and immediately before compression in the process for compression molding.
[Fig. 27] Fig. 27 is a longitudinal sectional view showing an initial state of compression in the process for compression molding.
[Fig. 28] Fig. 28 is a longitudinal sectional view showing a state in which compression is completed in the process for compression molding.
[Fig. 29] Fig. 29 is a longitudinal sectional view showing a third embodiment of a molding die of a fuel cell bipolar plate according to the present invention.
[Fig. 30] Fig. 30 is an explanatory diagram of film formation of a DLC film on the cavity side surface of an upper inner punch using an ionization evaporation method.
[Fig. 31] Fig. 31 is an explanatory diagram of the film formation of a DLC film on the cavity side surface of an upper outer punch.

### BEST MODE FOR CARRYING OUT THE INVENTION

Embodiments of the present invention will be explained with reference to the drawings.

Figs. 1 are (a) a front view and (b) a rear view showing an embodiment of a fuel cell bipolar plate according to the present invention, and Figs. 2 are (a) a sectional view taken along a line II-II in Figs. 1 and (b) an enlarged view of a part A.

A fuel cell bipolar plate 1 is a bipolar plate applied in a polymer electrolyte fuel cell and has a flow passage groove part 2 and a surrounding part 4 that surrounds the flow passage groove part 2 on both surfaces (at least on one surface).

Although the dimensions of the bipolar plate 1 differ depending on the electric power generation performance of a fuel cell system, the outline dimensions are 50 to 400 mm, for example, 150 mm in length × 100 mm in width, and 0.5 to 5 mm, for example, 2.0 mm in thickness, and it has a plate-like shape.

In the flow passage groove part 2 of the bipolar plate 1, a groove (flow passage groove) 3, which serves as a flow passage for a fuel gas, an oxidizing gas, or cooling water, is formed. In general, the depth of the flow passage groove 3 is about half or less the plate thickness of the bipolar plate 1, for example, 0.5 mm. The width of the flow passage groove 3 is 0.5 to 5 mm, for example, 1 mm. The pitch between the neighboring flow passage grooves 3 is, for example, 2 mm. The flow passage groove 3 is formed in a fine arrangement in a prescribed area surrounded by the surrounding part 4 on the surface of the bipolar plate 1, forming the flow passage groove part 2.

The flow passage groove 3 is linked with a manifold 5 formed in the surrounding part 4 of the bipolar plate 1 and a fuel gas, an oxidizing gas, or cooling water is introduced and ejected through the manifold 5. In Figs. 1, only two systems of the flow passage groove 3 and the manifold 5 are shown and a third flow passage groove and a third manifold are not shown.

Although a groove is formed also in the surrounding part 4, this groove is a groove for sealing in an appropriate sealing material and not a groove that serves as a flow passage of a fluid, that is, not the flow passage groove 3. In the present specification, the surrounding part 4 is defined including such a groove.

A molding material used for the fuel cell bipolar plate 1 according to the present invention is one including a carbon quality powder as a main component and a resin base material is mixed as a binder.

Because the bipolar plate 1 requires a high conductivity, it is desirable for the carbon quality material to have a high crystallinity graphite structure and artificial graphite, natural graphite, swelling graphite, etc., are suitable therefor, or they can be mixed in a suitable ratio. From the standpoint of the conductivity and flowability of the material, the graphite powder with an average particle diameter φ is 5 to 100 µm is used, and most preferably, φ is 10 to 60 µm. The ash content in the graphite powder impedes an electro-chemical reaction of a catalyst neighboring the bipolar plate 1 and reduces its durability, and therefore, preferably, its content is 0.5% or less.

On the other hand, the resin base material used as the carbon quality powder binder can be thermoplastic or thermosetting. Preferably, from the standpoint of mechanical strength and durability, a thermosetting resin that forms a three-dimensional molecular structure is used. As the thermosetting resin, resin of phenol base, epoxy base, diarylphthalate base, unsaturated polyester base, etc, can be used, however, from the standpoint of productivity and durability, a phenol base resin is preferable.

A molding material with a blend ratio between the graphite powder and the resin base binder of graphite 75 to 95 wt% and resin base binder 25 to 5 wt% is used from the standpoint of the balance between high conductivity, high non-gas permeability and mechanical strength, and most preferably, a molding material with a blend ratio of graphite 82 to 93 wt% and resin base binder 18 to 7 wt% is used.

By using the above mixed material, it is possible to form the fuel cell bipolar plate 1 according to the present invention by a molding die and molding process (manufacturing method) explained below.

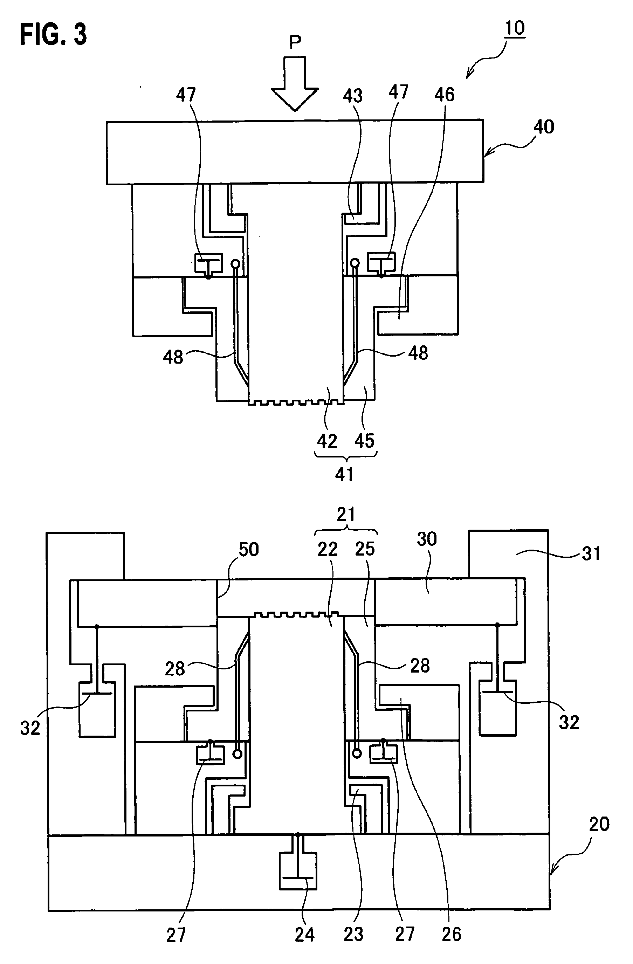

Fig. 3 is a longitudinal sectional view showing a first embodiment of a molding die used in a manufacturing method of the fuel cell bipolar plate 1 according to the present invention and the die is shown in a state of being opened more than in a state of actual mold opening for explanations. A core is omitted, which is a die for forming the manifold 5 and a through hole for stacking the separate 1 formed in the surrounding part 4.

A molding die 10 includes a lower die (lower punch) 21 provided on a fixed side block 20, an upper die (upper punch) 41 provided on a mobile side block 40, and a frame body (die) 30, which is a die that carries the periphery of a cavity 50 formed between the upper and lower dies 41 and 21. The frame body (die) 30 is provided also on the fixed side block 20 and the upper die (upper punch) 41 is actuated by a ram pressure together with the mobile side block 40.

The lower die (lower punch) 21 is configured by dividing it into a lower inner die (lower inner punch) 22, which is a die that forms the shape of the flow passage groove part 2 area on the rear surface of the bipolar plate 1, and a lower outer die (lower outer punch) 25, which is a die that forms the shape of the surrounding part 4 area on the rear surface of the bipolar plate 1.

The lower punch 21 includes an actuating member (actuator) 24 that causes the lower inner punch 22 to advance and retract so that it can project until it comes into contact with a stopper block 23 with respect to the lower outer punch 25 and an actuating member (actuator) 27 that causes the lower outer punch 25 to advance and retract so that it can project until it comes into contact with a stopper block 26 with respect to the lower inner punch 22.

An actuating force by the actuator 24 that projects the lower inner punch 22 with respect to the lower outer punch 25 is set to about a magnitude with which the projection of the lower inner punch 22 is substantially cancelled out when a process for compression by the ram pressure is completed.

The lower punch 21 further includes a lower punch air blower line 28 that blows out compressed air from a division surface between the lower inner punch 22 and the lower outer punch 25 so that the flow passage groove part 2 on the rear surface of the bipolar plate 1 can be easily released from the die when the lower outer punch 25 is projected with respect to the lower inner punch 22 at the time of die opening.

The upper die (upper punch) 41 is configured by dividing it into an upper inner die (upper inner punch) 42, which is a die that forms the shape of the flow passage groove part 2 area on the front surface of the bipolar plate 1, and an upper outer die (upper outer punch) 45, which is a die that forms the shape of the surrounding part 4 area on the front surface of the bipolar plate 1.

The upper punch 41 includes an actuating member (actuator) 47 that causes the upper outer punch 45 to advance and retract so that it can project until it comes into contact with a stopper block 46 with respect to the upper inner punch 42.

A stroke by the actuator 47 that projects the upper outer punch 45 with respect to the upper inner punch 42 and a stroke by the actuator 27 that projects the lower outer punch 25 with respect to the lower inner punch 22 are set substantially a little greater than the dimension of the depth of the flow passage groove part 2 on each of the front and rear surfaces of the bipolar plate 1.

The upper punch 41 further includes an upper punch air blower line 48 that blows out compressed air from a division surface between the upper inner punch 42 and the upper outer punch 45 so that the flow passage groove part 2 on the front surface of the bipolar plate 1 can be easily released from the die when the upper outer punch 45 is projected with respect to the upper inner punch 42 at the time of die opening.

The frame body (die) 30 includes an actuating member (actuator) 32 that causes the frame body (die) 30 to advance and retract so that it can project until it comes into contact with a stopper block 31 from the position at which the top surface thereof is lower than the top surface of the lower punch 21.

In the molding die 10, each die of the die 30, the lower inner punch 22, the lower outer punch 25, the upper inner punch 42, and the upper outer punch 45 is held so that they can operate in the direction of compression molding by the function of a press device (not shown) and a die set function for holding a die. The compression molding is then carried out by the single axis molding in the direction vertical to the plane part having the maximum area of the bipolar plate 1 as shown by the arrow P in Fig. 3.

The die configuration shown in Fig. 3 is only an example and depending on its shape, the bipolar plate 1 can be dealt with an arbitrary position of die division and an arbitrary number of die configurations.

The molding die 10 according to the present invention has a structure, as described above, in which the punch is divided into the flow passage groove part 2 area and the surrounding part 4 area of the bipolar plate 1, and therefore the following molding processes can be made.

In the compression molding using the powder-like material, the amount of material to be filled into the cavity 50 is determined using the ratio between the target density of the compression-molded product and the bulk density of the material as a compression ratio. In particular, in the case of a material poor in flowability, the variations in partial compression ratios in the molded product cause directly the variations in density and the quality is degraded considerably. In the filling method of powder-like material in the method for molding a powder-like material by compression press, generally, the variations in the amount of filling are suppressed by removing the material excessively provided on the basis of the top surface of the die.

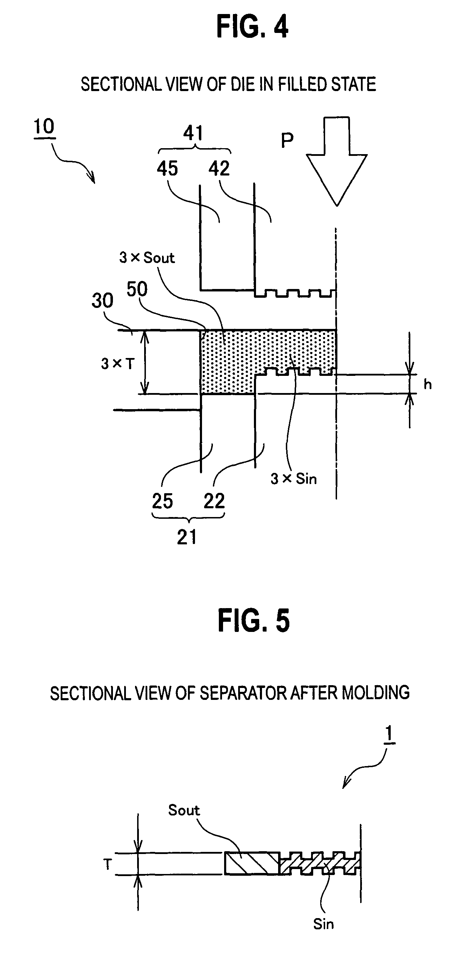

Fig. 4 is a longitudinal sectional view of relevant parts showing a state in which the cavity 50 of the molding die 10 is filled with the powder-like material.

Fig. 5 shows a longitudinal sectional view of the bipolar plate 1, which is a compression-molded product. The position of the section in Fig. 4 is the same as that in Fig. 5.

In the manufacturing process using the molding die 10 according to the present invention, when it is assumed that the ratio between the target density and the bulk density of the powder-like material, that is, the compression ratio, is 3, an appropriate material is filled if a space having a cross sectional area of 3×Sₒᵤₜ is provided by raising the die 30 by 3×T mm from the top surface of the lower punch 21, where Sₒᵤₜ is the cross sectional area of the surrounding part 4 area of the bipolar plate 1 and T mm is the thickness of the product.

At this time, the top surface of the lower outer punch 25 is flat, and therefore an ideal filling of material is possible.

In contrast to this, if the die 30 is raised by 3×T mm, the material corresponding to the formation of the cross sectional area of the die convex part for forming the flow passage groove 3 is excessive and the material filled in the flow passage groove part 2 area exceeds 3×Sᵢₙ, where Sᵢₙ is the cross sectional area of the flow passage groove part 2 area of the bipolar plate 1.

Because of this, in the manufacturing process using the molding die 10 according to the present invention, it is possible to adjust the cross sectional area to 3×Sᵢₙ in order to prevent the filling of the excessive material by raising the lower inner punch 22 that forms the flow passage groove 3 by a prescribed dimension h, that is, by reducing the space to be filled with material by an amount corresponding to the dimension h.

In addition, because the dimension h can be adjusted arbitrarily, it is possible to relatively control the density of the Sᵢₙ part, which is the flow passage groove part 2, with respect to the density of the Sₒᵤₜ part, which is the surrounding part 4. It is also possible to make both the densities equal to each other and if necessary, it is further possible to increase or decrease the density of the flow passage groove part 2 with respect to the density of the surrounding part 4.

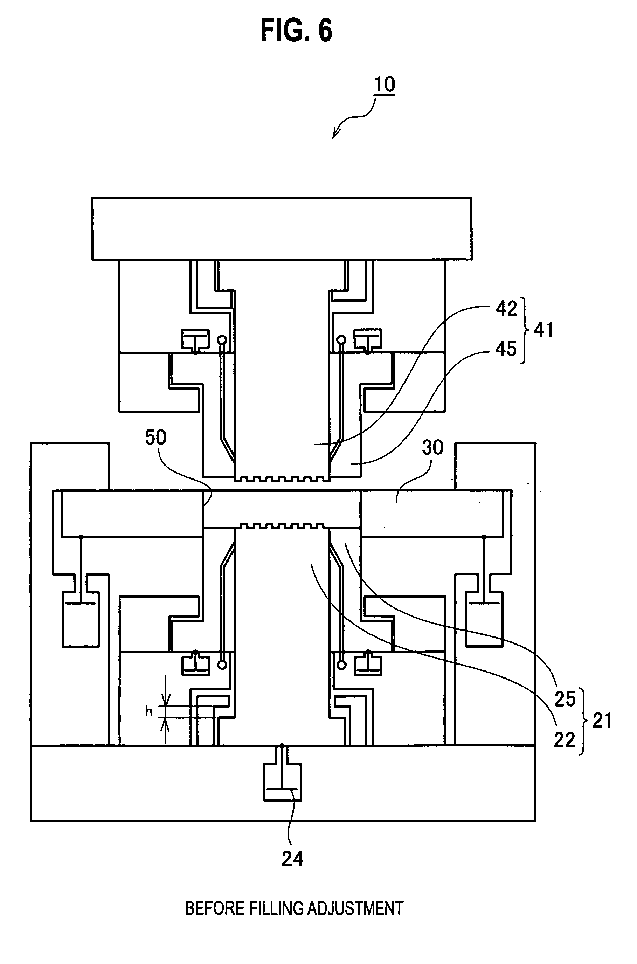

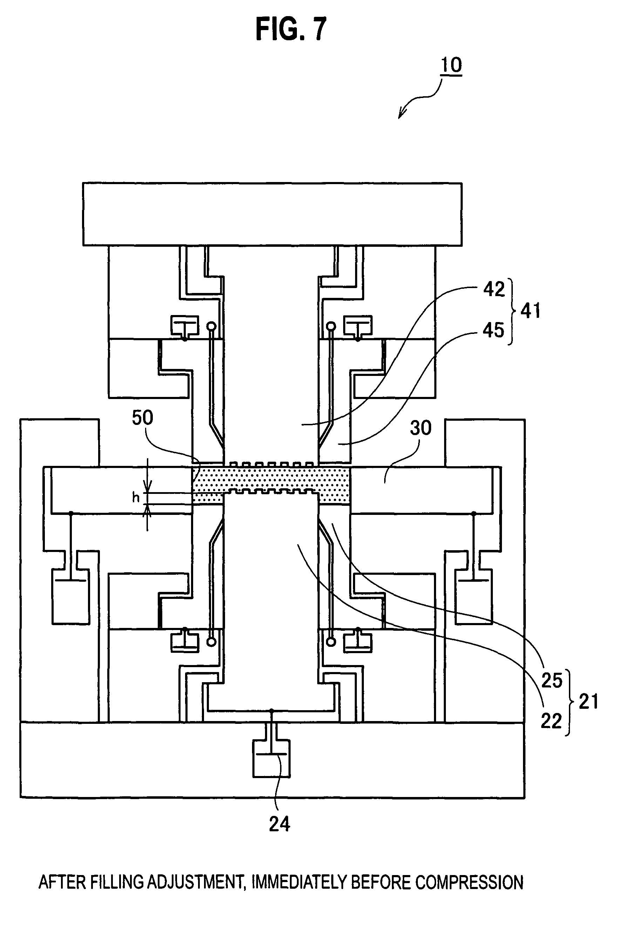

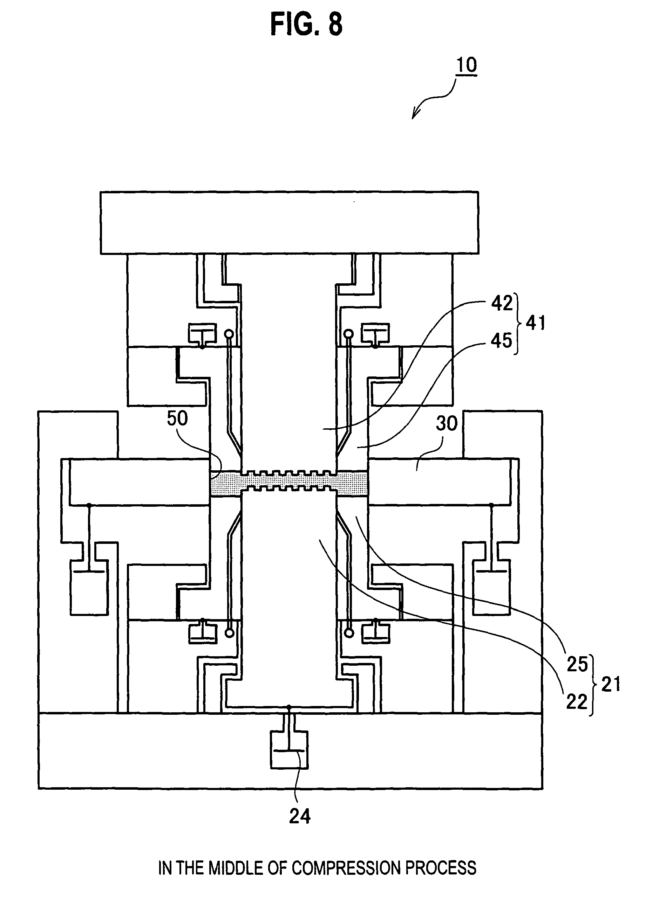

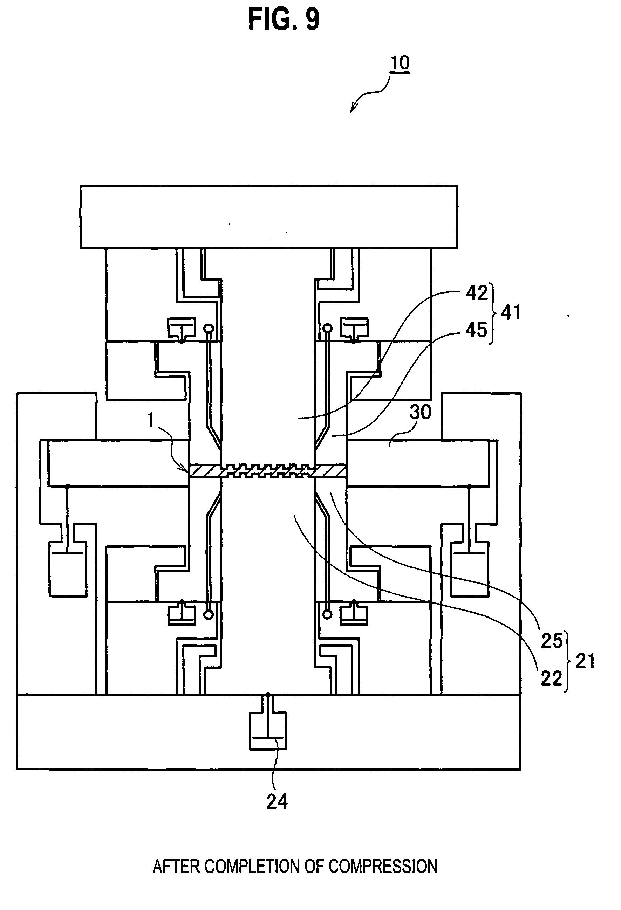

Fig. 6 to Fig. 9 show processes for compression molding in the method of manufacturing the fuel cell bipolar plate using the molding die 10 according to the present invention: Fig. 6 shows a state before filling adjustment; Fig. 7 shows a state after the filling adjustment and immediately before compression; Fig. 8 shows a state in the middle of the compression process; and Fig. 9 shows a state after completion of compression.

The variations in density of the entire bipolar plate 1 can be reduced by making the compression rate of the flow passage groove part 2 area where the amount of material to be filled is small equal to the compression rate of the surrounding part 4 area, that is, by completing the processes from the commencement of compression to the completion of compression substantially at the same time, and thus the variation in quality between both the areas 2 and 4 can be eliminated.

Specifically, it is preferable to float the lower inner punch 22 with a holding force smaller than the compression force on the upper punch 41 side by the drive force of the actuator 24, such as air pressure, hydraulic pressure, spring, electric motor, etc., and to lower the lower inner punch 22 in a state in which it can lower according to the compression force on the upper punch 41 side, or with a rate slightly lower than that of the upper punch 41 side. As a result, it is also possible to lower the compression rate even in the area in which the amount of filling is small, that is, the compression stroke is short.

Fig. 8 shows the middle state in which the powder-like material is being compressed with the compression ratio 2. Although the lower inner punch 22 has lowered, however, it has not reached the position of completion of compression, that is, in the middle state in which the target density has not been achieved yet.

Fig. 9 shows the state of completion of compression. The lower inner punch 22 is located at the lower limit by the press compression force larger than the holding/raising force by the actuator 24 and the bipolar plate 1 is formed in a state in which the lower inner punch 22 is in the same plane as that of the lower outer punch 25, or at a prescribed position.

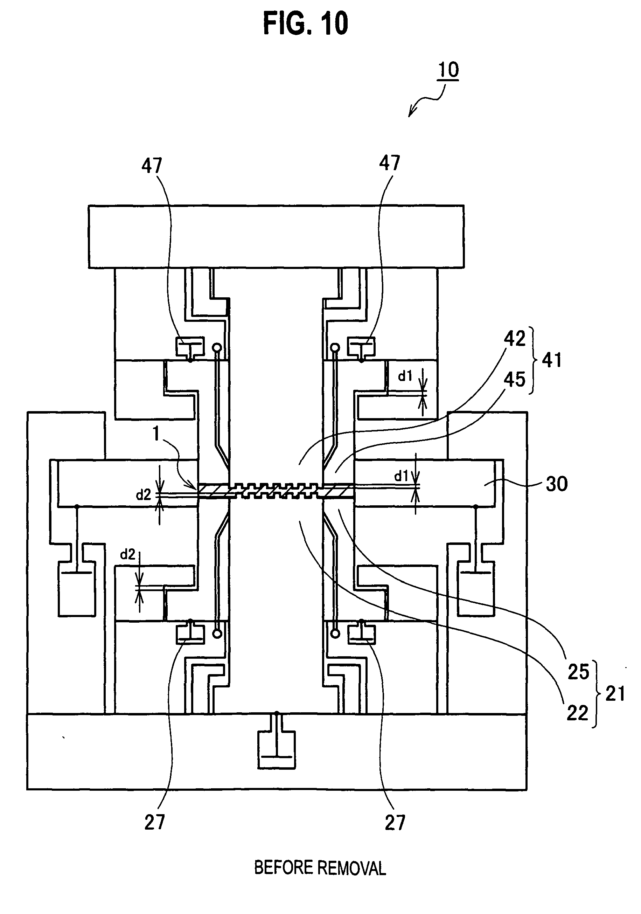

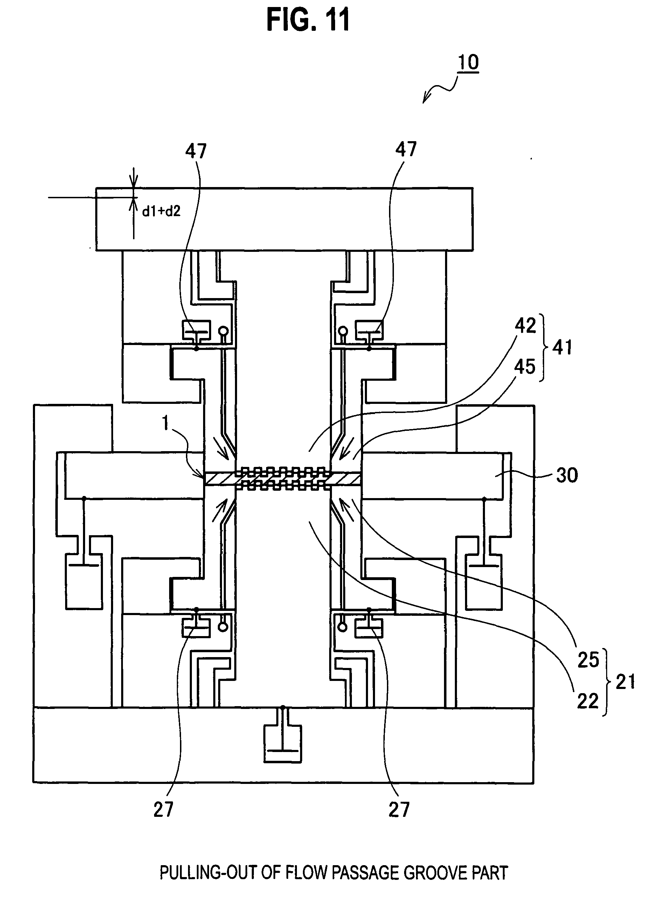

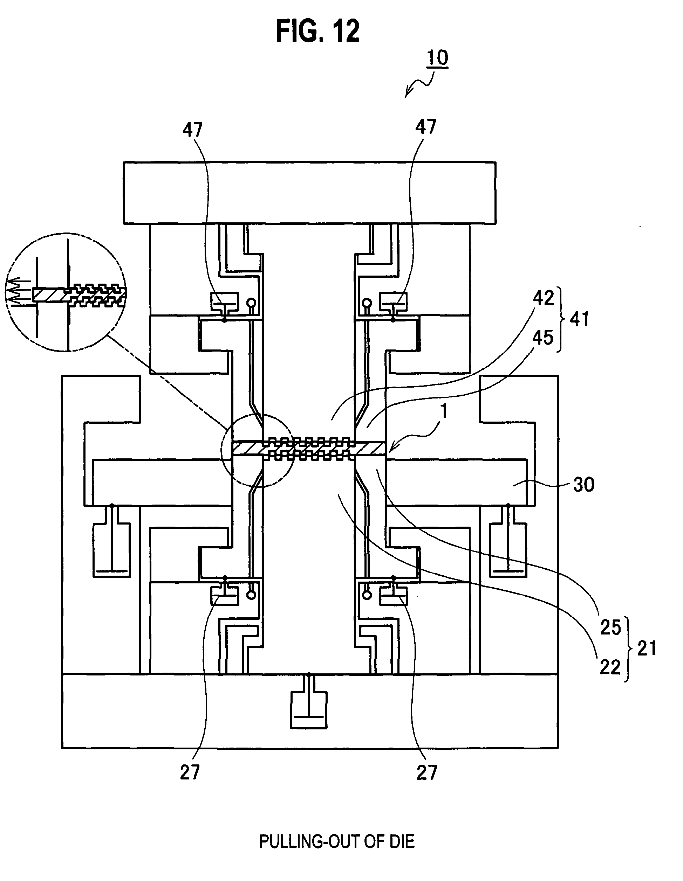

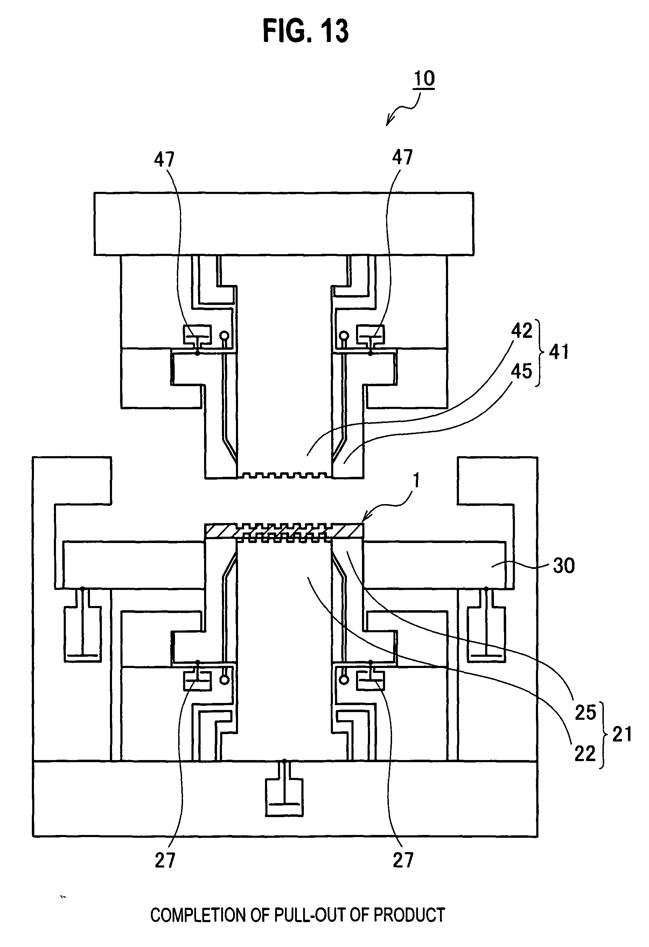

Fig. 10 to Fig. 13 show processes for molded product removal in the method of manufacturing the fuel cell bipolar plate using the molding die 10 according to the present invention: Fig. 10 shows a state immediately before removal; Fig. 11 shows a state in which the flow passage groove part is pulled out; Fig. 12 shows a state in which the die has lowered; and Fig. 13 shows a state in which the die opening is completed.

Fig. 10 shows a state immediately before the removal of the bipolar plate. At this time, a force is applied to the lower outer punch 25 and the upper outer punch 45 in the direction of projecting the bipolar plate 1 by the drive force of the actuators 27 and 47, such as air pressure, hydraulic pressure, spring, electric motor, etc.

It is required that the projecting force be smaller than the force with which the upper ram (not shown) of the press device pushes the bipolar plate 1. When it is assumed that the depth of the flow passage groove 3 formed by the upper inner punch 42 is d₁, the stroke of the upper outer punch 45 is set a dimension equal to or greater than d₁. Similarly, when it is assumed that the depth of the flow passage groove 3 formed by the lower inner punch 22 is d₂, the stroke of the lower outer punch 25 is set a dimension equal to or greater than d₂.

Fig. 11 shows a state in which the die of the flow passage groove part 2 poor in mold releasability has been pulled out from the bipolar plate 1. When the upper ram rises in a state in which a force is applied, with which the upper outer punch 45 and the lower outer punch 25 project toward the bipolar plate 1, a force is applied so that the upper inner punch 42 is released from the bipolar plate 1 with the upper outer punch 45 as a support point and similarly, the lower inner punch 22 is released from the bipolar plate 1 with the lower outer punch 25 as a support point. When the upper ram has risen by the total step differences (d₁+d₂) of the flow passage groove 3 on both the front and rear surfaces of the bipolar plate 1, the flow passage groove 3 on both the front and rear surfaces of the bipolar plate 1 is released from the die.

When the process is started, that is, immediately after the die release is started, because the flow passage groove part 2 of the bipolar plate 1 is released from the die in a hermetically sealed state, the introduction of outside air from the bipolar plate 1 and the die surface, and the division line of the die can be hardly expected and thus a pressure-reduced state is brought about. A smooth die release can be made by blowing out compressed air through the division surface of each of the inner punches 22 and 42 and each of the outer punches 25 and 45.

Fig. 12 shows a state in which the die 30 that forms the circumferential shape of the bipolar plate 1 has lowered. A large compression stress is generated within the bipolar plate 1 immediately after the formation by compression molding. When the bipolar plate 1 is removed, the internal stress is released at the same time when it is released from the die and the spring back occurs, and then the bipolar plate 1 expands. Although the amount of spring back differs depending on the material, molding temperature, compression force, etc., the spring back occurs at about 0.2 to 0.8% and the amount of expansion will be 1 mm or more with a bipolar plate of 150 mm in length × 100 mm in width.

As shown in Fig. 12, the internal stress is released in the direction of the plane (in the transverse direction in the drawing) of the bipolar plate 1 by pulling out the die 30 in a state in which the upper outer punch 45 and the lower outer punch 25 hold down the bipolar plate 1. If all of the upper punches 41 are raised before the die 30 is pulled out, the internal stress that cannot be released to the periphery side has no way out and the center part of the bipolar plate 1 deforms into a convex shape.

Fig. 13 shows a state in which the upper punch 41 has been pulled out completely from the bipolar plate 1 and therefore the removal is possible with ease. As a method of releasing the upper punch 41 from the bipolar plate 1 without fail, it is recommended to cause the air blow on the upper punch 41 side to operate for a longer time than that on the lower punch 21 side.

### First example

A molding process of a fuel cell bipolar plate compression-molded by the manufacturing method according to the present invention using the molding die according to the present invention is explained specifically below. The present invention, however, is not limited to the examples.

(1) The bipolar plate 1 has a shape with a length of 150 mm, a width of 100 mm, and a thickness of 2 mm (or 2.5 mm) and the flow passage groove 3 has a width of 1 mm, a depth of 0.5 mm, and a pitch of 2 mm in 12 columns, and is arranged in the center of each of the front and rear surfaces.

(2) The powder-like material includes 80 wt% spherical natural graphite (or similar artificial graphite) with 0.15% ash content and an average particle diameter φ of 30 µm, and as a resin base binder, a mixture of 20 wt% resole type phenol is used. The bulk density is 0.65 g/cm³.

(3) As a compression molding device, an upper ram lowering type 150 ton hydraulic press is used. The upper inner punch 42 is directly linked with the upper side platen and others, that is, the die 30, the upper outer punch 45, the lower outer punch 25, and the lower inner punch 22 operate by a cylinder using a hydraulic pressure provided in a die set as a drive source and the operation stroke is determined by a stroke end block provided in the die set.

As to the operation timing of each die, the position in the upper ram stroke is detected with a linear gauge and hydraulic valves are switched by sequence control triggered by the voltage signal of the linear gauge and thus each operation is controlled.

(4) A density of 1.95 g/cm³ by which the performance as the bipolar plate 1 can be obtained as a target, the reference compression ratio is set to 3 because the bulk density of the powder-like material is 0.65 g/cm³. The amount of material to be filled in the surrounding part 4 area of the bipolar plate 1 is then set to 6 mm calculated from 2 mmx3. Because it is necessary to reduce the flow passage groove part 2 area by 1.8 mm so that the ratio between the cross sectional area of the bipolar plate 1 and the cross sectional area of the space of the cavity 50 is 1:3, for the lower inner punch 22 of the die that forms the flow passage groove part 2 area, the amount of filling is set to 4.2 mm calculated from 6 mm-1. 8 mm, because the lower inner punch 22 is raised by 1.8 mm.

(5) The die is heated to 60°C in order to improve flowability and compressed for 15 seconds under a load of 125 tons by the hydraulic press device.

(6) After the compression molding is completed, the hydraulic valve is opened so that the upper outer punch 45 and the lower outer punch 25 operate in the direction of pushing out the bipolar plate 1. At the same time, air for die release is blown out from the division part of each of the outer punches 45 and 25 and each of the inner punches 42 and 22.

With this state being held, if the press upper ram is raised by 1 mm, the upper outer punch 45 and the lower outer punch 24 the operation stroke of which is set to 0.5 mm, respectively, remains in the state in which they sandwich the bipolar plate 1 and the upper inner punch 42 and the lower inner punch 22 are pulled out from the flow passage groove part 2 of the bipolar plate 1.

Immediately after that, the die 30 is lowered by the hydraulic drive and the peripheral part of the bipolar plate 1 is pulled out. After that, the upper ram is raised and the removal of the bipolar plate 1 is completed.

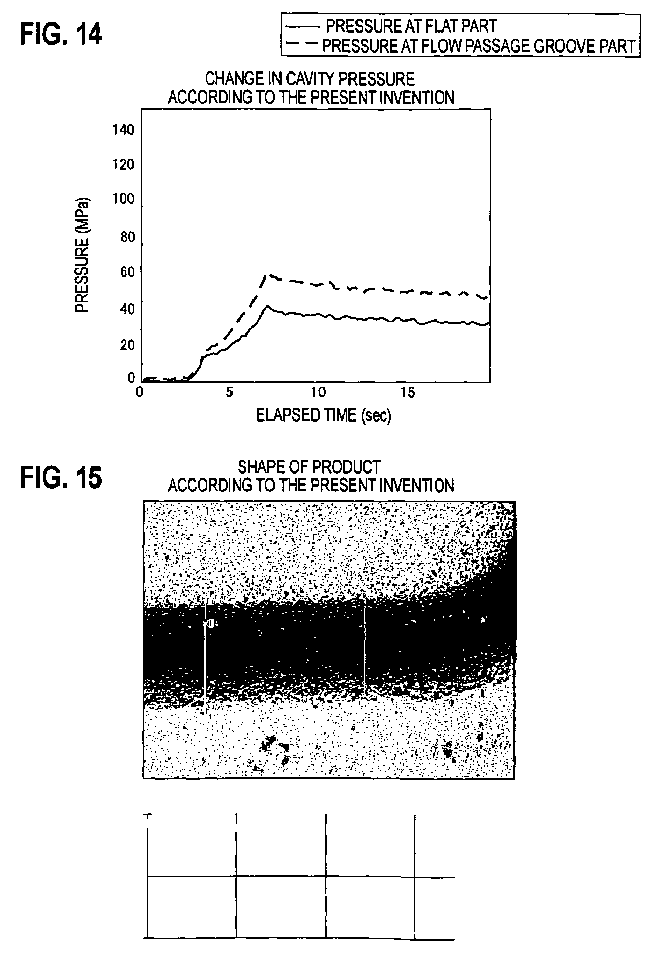

(7) Fig. 14 is a graph showing a change in the pressure of the material produced in the compression molding process by a pressure sensor of the cavity 30 installed in the upper inner punch 42 and the upper outer punch 45. The pressured states of the surrounding part 4 area and the flow passage groove part 2 area are substantially the same. The density of the surrounding part is 1.97 g/cm³ and that of the flow passage groove part is 1.95 g/cm³, indicating a uniform quality.

Fig. 15 is an enlarged view of the flow passage groove part 2 corner of the bipolar plate 1. It can be seen that the shape of the die is transferred with precision and the removal of product is natural and smooth.

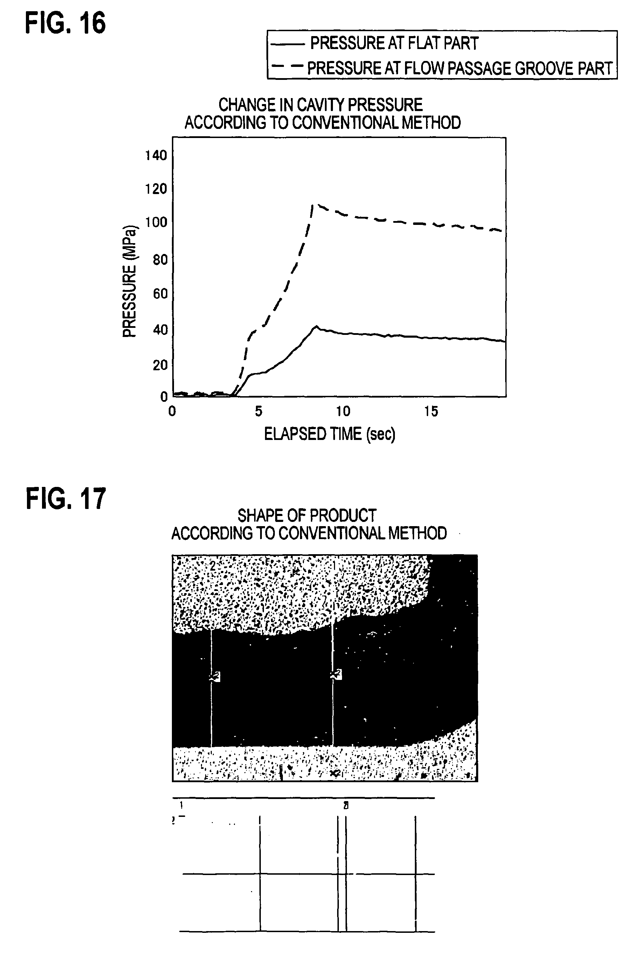

(8) On the other hand, Fig. 16 shows a change in pressure when compression molding is carried out by a conventional technique. Although the rise in pressure in the flow passage groove part area is large, the rise in pressure in the surrounding part area is about 1/2 to 1/3, indicating considerable variations. As a result, the density in the surrounding part area is 1.79 g/cm³ and that in the flow passage groove part area is 1.98 g/cm³, and the drop in density in the surrounding part is remarkable.

Fig. 17 is an enlarged view of the flow passage groove part corner of the bipolar plate. It can be seen that a large die release resistance is produced when the bipolar plate is removed and the corner part is missing.

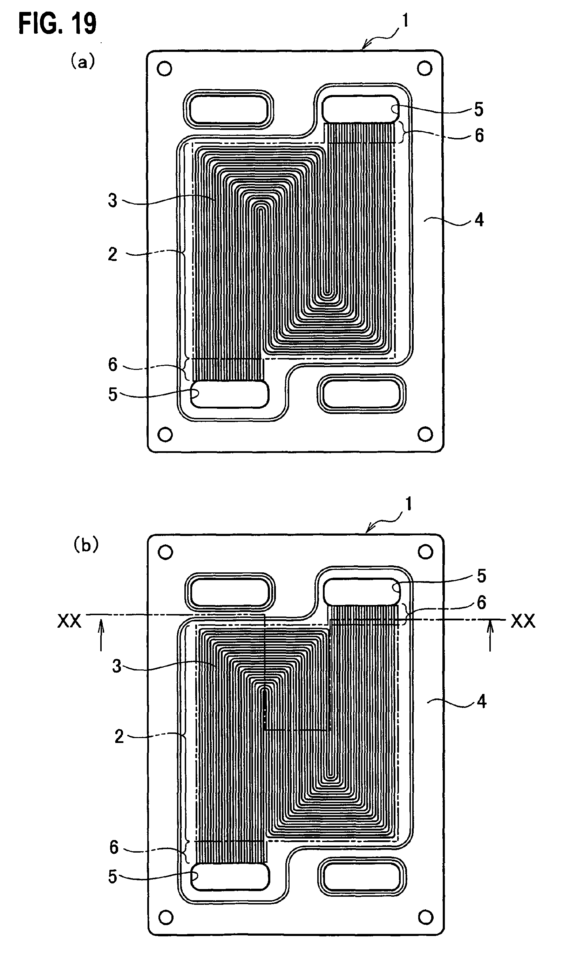

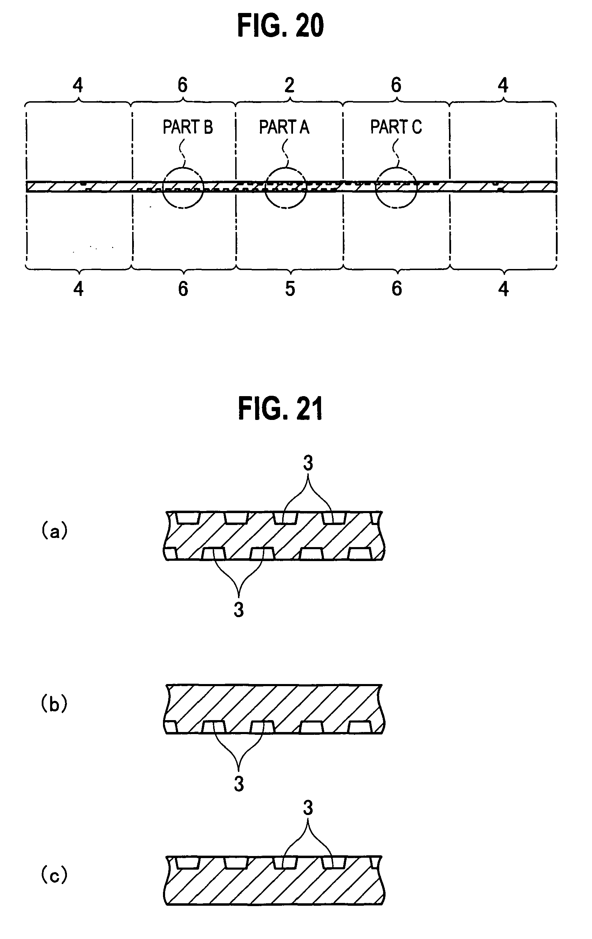

Figs. 19 are (a) a front view and (b) a rear view when each part of the fuel cell bipolar plate shown in Figs. 1 is viewed in detail, Fig. 20 is a sectional view taken along the line XX-XX in Figs. 19, and Figs. 21 are (a) an enlarged view of the part A, (b) an enlarged view of the part B, and (c) an enlarged view of a part C of Fig. 20.

The section of the fuel cell bipolar plate mainly includes the flow passage groove part 2 and the surrounding part 4 as shown in Fig. 2(a). The flow passage groove part 2 includes the flow passage groove 3 on both the front and rear surfaces as shown in Fig. 2(b).

On the contrary, at the part where each of the flow passage grooves 3 is linked with the manifold 5, there is an area 6 in which the flow passage groove 3 is formed only on one surface and it is not exist on the opposite surface as shown in Fig. 20, Figs. 21. In other words, when the section of the fuel cell bipolar plate is viewed in detail, it has the double-surface flow passage groove part 2 including the flow passage groove 3 on both surfaces, the one-surface flow passage groove part 6 including the flow passage groove 3 only on one surface, and the surrounding part 4 surrounding the periphery of the flow passage groove parts 2 and 6. The opposite surface of the one-surface flow passage groove part 6 includes the surrounding part 4.

The one-surface flow passage groove part 6 includes the one-surface flow passage groove part 6 including the flow passage groove 3 only on the rear surface, as shown in Fig. 21(b), an enlarged view of the part B in Fig. 20, and the one-surface flow passage groove part 6 including the flow passage groove 3 only on the front surface, as shown in Fig. 21(c), an enlarged view of the part C in Fig. 20.

As a matter of course, such a one-surface flow passage groove part 6 is assigned to the area of the lower inner punch 22 and the upper inner punch 42 together with the double-surface flow passage groove part 2 in the molding die 10 shown in Fig. 3. In the case of the molding die 10 shown in Fig. 3, while the lower punch 21 includes the actuating member (actuator) 24 that causes the lower inner punch 22 to advance and retract so that it can project until it comes into contact with the stopper block 23 with respect to the lower outer punch 25, the upper punch 41 does not include such an actuating member (actuator). Because of this, the positional relationship between the upper inner punch 42 and the upper outer punch 45 remains the same from the state before the filling adjustment shown in Fig. 6 through the state after the filling adjustment and immediately before compression shown in Fig. 7, the state in the middle of the compression process shown in Fig. 8, and to the state after the compression is completed shown in Fig. 9.

As shown in Fig. 4, by raising the lower inner punch 22 by the prescribed dimension h with respect to the lower outer punch 25 to reduce the space to be filled with the material by the dimension h, the cross sectional area Sₒᵤₜ of the surrounding part 4 area and the cross sectional area Sᵢₙ of the flow passage groove part 2 area of the bipolar plate 1 are adjusted, and the compressed states become substantially equal to each other as shown in Fig. 14 and the uniformity in the density is thus achieved.

As described above, however, the fuel cell bipolar plate 1 includes the one-surface flow passage groove part 6 that includes the flow passage groove 3 only on the rear surface and the one-surface flow passage groove part 6 that includes the flow passage groove 3 only on the front surface in addition to the double-surface flow passage groove part 2 and the surrounding part 4. Among these, the cross sectional area of the one-surface flow passage groove part 6 that includes the flow passage groove 3 only on the rear surface has been adjusted in advance by the dimension h with the surrounding part 4 therearound. In contrast to this, the cross sectional area of the one-surface flow passage groove part 6 that includes the flow passage groove 3 only on the front surface has not been adjusted with the surrounding part 4 therearound and the adjustment is not done through the compression process.

As described above with reference to Fig. 18, when the compression ratio 3 is set to the area of the surrounding part 4, the cross sectional area of the area of the flow passage groove part (double-surface flow passage groove part) 2 changes from 86.4 mm² when filled to 22.2 mm² when compressed by 4 mm with the compression ratio 3 by press stroke, and the compression ratio of the flow passage groove part 2 on the basis of the cross sectional area is 3. 9, that is, a compression ratio 30% excessive with respect to the surrounding part 4 area. Similarly, the compression ratio of the area of the one-surface flow passage groove part 6 is 10% excessive with respect to the surrounding part 4 area.

In other words, in the case of the molding die 10 shown in Fig. 3, while the cross sectional area has been adjusted in advance by the dimension h with respect to the surrounding part 4 area for the one-surface flow passage groove part 6 area the compression ratio of which differs therefrom along with the double-surface flow passage groove part 2 area on the rear surface side of the bipolar plate 1, on the front surface side of the bipolar plate 1, the cross sectional area is not adjusted for the one-surface flow passage groove part 6 area or the double-surface flow passage groove part 2 area.

The molding die is then explained below, which is capable of improving the uniformity in the density of the bipolar plate 1 by doing the required adjustment of the cross sectional area evenly for both the rear surface side and the front surface side of the bipolar plate 1 at the initial stage of compression (when compression is started).

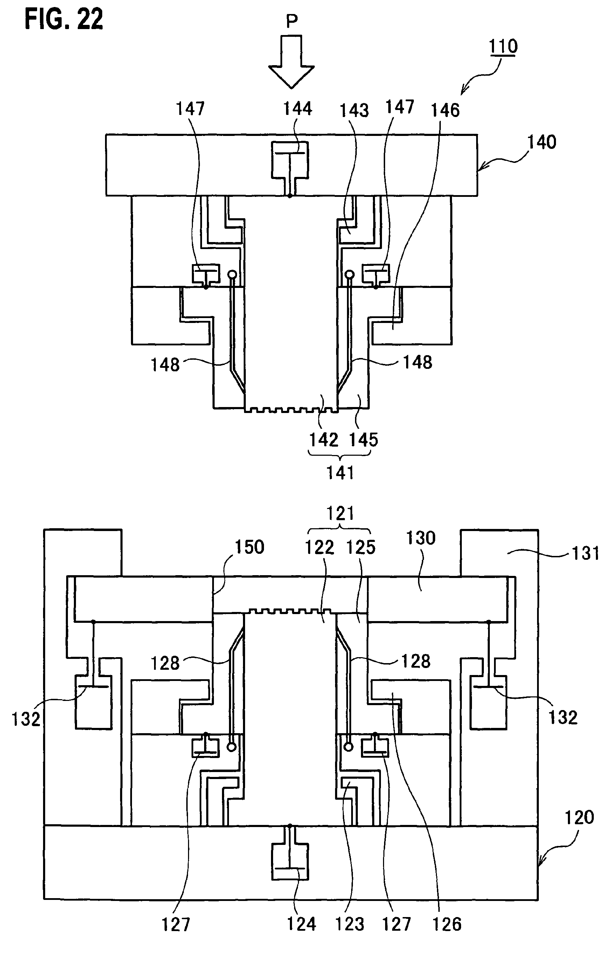

Fig. 22 is a longitudinal sectional view showing a second embodiment of the molding die used in the manufacturing method of the fuel cell bipolar plate 1 according to the present invention, and the die is shown in a state of being opened more than in a state of actual mold opening for explanations. A core, which is a die for forming the manifold 5 and a through hole for stacking the bipolar plate 1 formed in the surrounding part 4, is omitted.

A molding die 110 includes a lower die (lower punch) 121 provided on a fixed side block 120, an upper die (upper punch) 141 provided on a mobile side block 140, and a frame body (die) 130, which is a die that carries the periphery of a cavity 150 formed between the upper and lower dies 141 and 121. The frame body (die) 130 is provided also on the fixed side block 120 and the upper die (upper punch) 141 is actuated by a ram pressure together with the mobile side block 140.

The lower die (lower punch) 121 is configured by dividing it into a lower inner die (lower inner punch) 122, which is a die that forms the shape of the area of the flow passage groove part 2 and 6 on the rear surface among the double-surface flow passage groove part 2 and the one-surface flow passage groove part 6 of the bipolar plate 1, and a lower outer die (lower outer punch) 125, which is a die that forms the shape of the surrounding part 4 area on the rear surface of the bipolar plate 1.

The lower punch 121 includes an actuating member (actuator) 124 that causes the lower inner punch 122 to advance and retract so that it can project until it comes into contact with a stopper block 123 with respect to the lower outer punch 125 and an actuating member (actuator) 127 that causes the lower outer punch 125 to advance and retract so that it can project until it comes into contact with a stopper block 126 with respect to the lower inner punch 122.

An actuating force by the actuator 124 that projects the lower inner punch 122 with respect to the lower outer punch 125 is set to about a magnitude with which the projection of the lower inner punch 122 is substantially cancelled out when a process for compression by the ram pressure is completed.

The lower punch 121 further includes a lower punch air blower line 128 that blows out compressed air from a division surface between the lower inner punch 122 and the lower outer punch 125 so that the flow passage groove parts 2 and 6 on the rear surface of the bipolar plate 1 can be easily released from the die when the lower outer punch 125 is projected with respect to the lower inner punch 122 at the time of die opening.

The upper die (upper punch) 141 is configured by dividing it into an upper inner die (upper inner punch) 142, which is a die that forms the shape of the area of the flow passage groove part 2 and 6 on the front surface among the double-surface flow passage groove part 2 and the one-surface flow passage groove part 6 of the bipolar plate 1, and an upper outer die (upper outer punch) 145, which is a die that forms the shape of the surrounding part 4 area on the front surface of the bipolar plate 1.

The upper punch 141 includes an actuating member (actuator) 144 that causes the upper inner punch 142 to advance and retract so that it can project until it comes into contact with a stopper block 143 with respect to the upper outer punch 145 and an actuating member (actuator) 147 that causes the upper outer punch 145 to advance and retract so that it can project until it comes into contact with a stopper block 146 with respect to the upper inner punch 142.

An actuating force by the actuator 144 that projects the upper inner punch 142 with respect to the upper outer punch 145 is set to about a magnitude with which the projection of the upper inner punch 142 is substantially cancelled out when a process for compression by the ram pressure is completed.

A stroke by the actuator 147 that projects the upper outer punch 145 with respect to the upper inner punch 142 and a stroke by the actuator 127 that projects the lower outer punch 125 with respect to the lower inner punch 122 are set substantially a little greater than the dimension of the depth of the flow passage groove parts 2 and 6 on each of the front and rear surfaces of the bipolar plate 1.

The upper punch 141 further includes an upper punch air blower line 148 that blows out compressed air from a division surface between the upper inner punch 142 and the upper outer punch 145 so that the flow passage groove parts 2 and 6 on the front surface of the bipolar plate 1 can be easily released from the die when the upper outer punch 145 is projected with respect to the upper inner punch 142 at the time of die opening.

The frame body (die) 130 includes an actuating member (actuator) 132 that causes the frame body (die) 130 to advance and retract so that it can project until it comes into contact with a stopper block 131 from the position at which the top surface thereof is lower than the top surface of the lower punch 121.

In the molding die 110, each die of the die 130, the lower inner punch 122, the lower outer punch 125, the upper inner punch 142, and the upper outer punch 145 is held so that they can operate in the direction of compression molding by the function of a press device (not shown) and a die set function for holding a die. The compression molding is then carried out by the single axis molding in the direction vertical to the plane part having the maximum area of the bipolar plate 1 as shown by the arrow P in Fig. 22.

The die configuration shown in Fig. 22 is only an example and it is also possible to omit part of the operations of the lower punch 121 and the upper punch 141 depending on the depth, width, and pitch of the flow passage groove 3 formed in the double-surface flow passage groove part 2 and the one-surface flow passage groove part 6 of the bipolar plate 1. Depending on the shape of the bipolar plate 1, it is possible to deal with an arbitrary position of die division and an arbitrary number of die configurations.

The molding die 110 according to the present invention has a structure, as described above, in which the punch is divided into the double-surface flow passage groove part 2 area and the one-surface flow passage groove part 6 area, and the surrounding part 4 area of the bipolar plate 1, and therefore the following molding processes are possible.

In the compression molding using the powder-like material, the amount of material to be filled into the cavity 150 is determined using the ratio between the target density of the compression-molded product and the bulk density of the material as a compression ratio. In particular, in the case of a material poor in flowability, the variations in partial compression ratios in the molded product cause directly the variations in density and the quality is degraded considerably. In the filling method of powder-like material in the method for molding a powder-like material by compression press, generally, the variations in the amount of filling are suppressed by removing the material excessively provided on the basis of the top surface of the die.

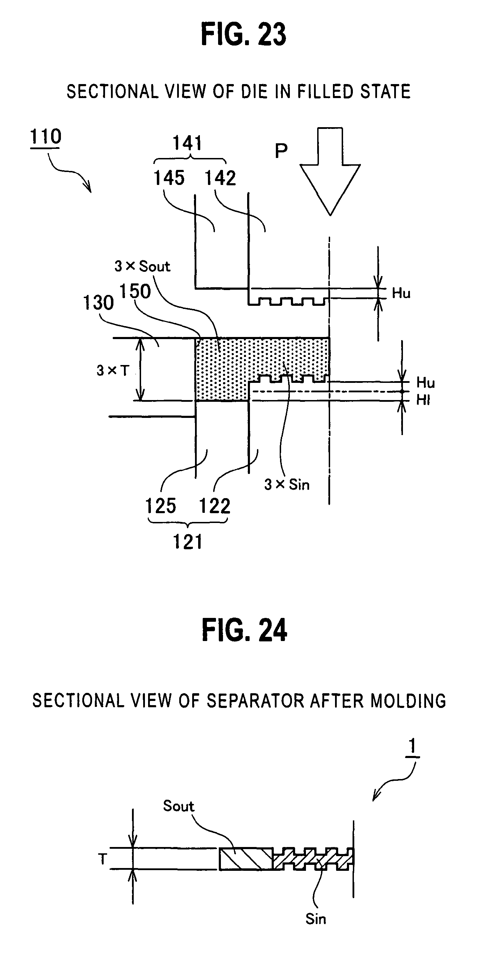

Fig. 23 is a longitudinal sectional view of relevant parts showing a state in which the cavity 150 of the molding die 110 is filled with the powder-like material.

Fig. 24 shows a longitudinal sectional view of the bipolar plate 1, which is a compression-molded product. The position of the section in Fig. 23 is the same as that in Fig. 24.

In the manufacturing process using the molding die 110 according to the present invention, when it is assumed that the ratio between the target density and the bulk density of the powder-like material, that is, the compression ratio, is 3, an appropriate material is filled if a space having a cross sectional area of 3×Sₒᵤₜ is provided by raising the die 130 by 3×T mm from the top surface of the lower punch 121, where Sₒᵤₜ is the cross sectional area of the surrounding part 4 area of the bipolar plate 1 and T mm is the thickness of the product.

At this time, the top surface of the lower outer punch 125 is flat, and therefore an ideal filling of material is possible.

In contrast to this, if the die 130 is raised by 3×T mm, the material corresponding to the formation of the cross sectional area of the die convex part for forming the flow passage groove 3 is excessive and the material filled in the double-surface flow passage groove part 2 area and the one-surface flow passage groove part 6 area exceeds 3×Sᵢₙ, where Sᵢₙ is the cross sectional area of the double-surface flow passage groove part 2 area and the one-surface flow passage groove part 6 area of the bipolar plate 1.

Because of this, in the manufacturing process using the molding die 110 according to the present invention, it is possible to adjust the cross sectional area to 3×Sᵢₙ in order to prevent the filling of the excessive material because the space in which the flow passage grooves 3 on the upper punch 141 side and the lower punch 121 side are formed can be reduced as follows.

In other words, the upper inner punch 142 that forms the upper punch side flow passage groove 3 of the bipolar plate 1 is projected (lowered) by a prescribed dimension Hu with respect to the upper outer punch 145 that forms the upper punch side surrounding part 4 and the amount of material to be filled corresponding to the upper punch side flow passage groove 3 is reduced.

Similarly, the lower inner punch 122 that forms the lower punch side flow passage groove 3 of the bipolar plate 1 is projected (raised) by a prescribed dimension H1 with respect to the lower outer punch 125 that forms the lower punch side surrounding part 4 and the amount of material to be filled corresponding to the lower punch side flow passage groove 3 is reduced.

In addition to the above, the dimension Hu by which the upper inner punch 142 that forms the upper punch side flow passage groove 3 is projected (lowered) is added to the amount of projection (rise) of the lower inner punch 122 and thereby the space in which the flow passage grooves 3 on the upper punch 141 side and the lower punch 121 side are formed is reduced by dimension (Hu+H1).

Because the dimension (Hu+H1) can be adjusted arbitrarily, the density of the Sᵢₙ part, which is the flow passage groove parts 2 and 6, can be relatively controlled with respect to the density of the Sₒᵤₜ part, which is the surrounding part 4. Both the densities can be made equal to each other and if necessary, it is also possible to increase or decrease the density of the flow passage groove parts 2 and 6 with respect to the density of the surrounding part 4.

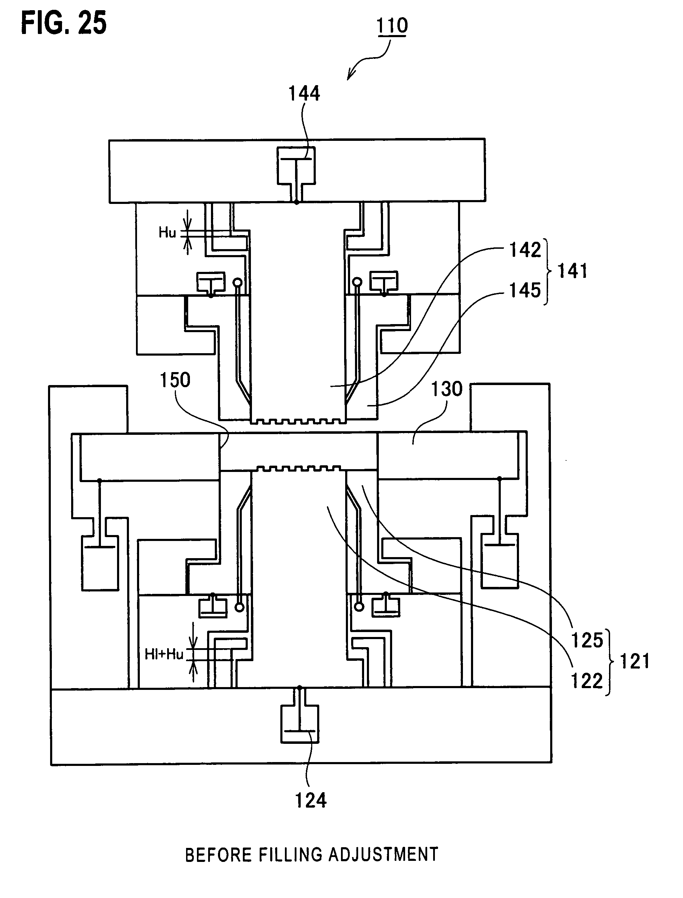

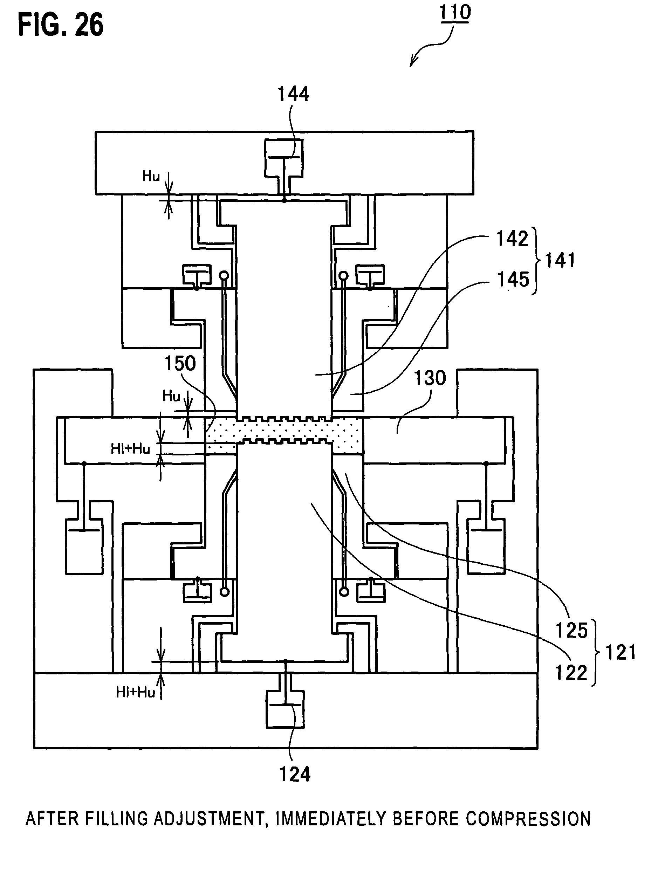

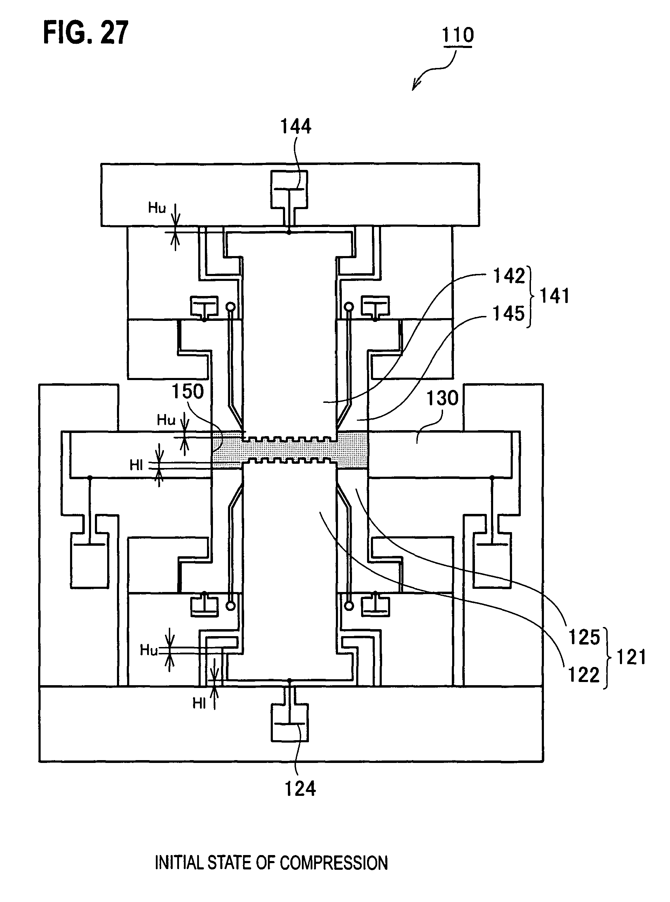

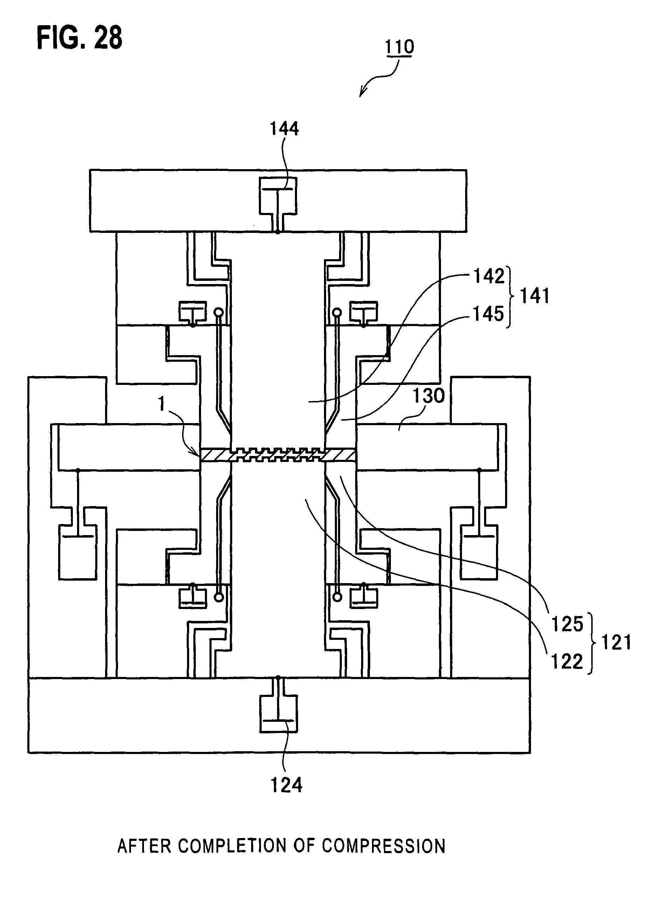

Fig. 25 to Fig. 28 show processes for compression molding in the method of manufacturing the fuel cell bipolar plate using the molding die 110 according to the present invention: Fig. 25 shows a state before filling adjustment; Fig. 26 shows a state after the filling adjustment and immediately before compression; Fig. 27 shows a state of the initial stage of compression; and Fig. 28 shows a state of completion of compression.

The variations in density of the entire bipolar plate 1 can be reduced by making the compression rate of the flow passage groove part 2 and 6 areas where the amount of material to be filled is small equal to the compression rate of the surrounding part 4 area, that is, by completing the processes from the commencement of compression to the completion of compression substantially at the same time, and thus the variation in quality between both the areas 2 and 6 and the area 4 can be eliminated.

Specifically, it is preferable to float the lower inner punch 122 with a holding force smaller than the compression force of the upper ram by the drive force of the actuator 124, such as air pressure, hydraulic pressure, spring, electric motor, etc., and to lower in a state in which it can lower according to the compression force on the upper punch 141 side, or with a rate slightly lower than that of the upper punch 141 side.

Similarly, it is preferable to float the upper inner punch 142 with a holding force smaller than the compression force of the upper ram by the drive force of the actuator 144, such as air pressure, hydraulic pressure, spring, electric motor, etc., and to relatively raise in a state in which it can rise relatively according to the compression force on the upper punch 141 side, or with a rate substantially the same as the lowering rate of the lower inner punch 122.

As a result, it is also possible to lower the compression rate even in the area in which the amount of filling is small, that is, the compression stroke is short.

Fig. 26 shows a state after the filling adjustment and immediately before compression in which the amount of filling that enables the equal compression ratio regardless of the sectional shape of the bipolar plate 1 is reserved in the cavity 150. At this time, the lower inner punch 22 is at a position where it is projected (raised) by the dimension (Hu+H1) with respect to the lower outer punch 125. On the other hand, the upper inner punch 142 is at a position where it is projected (lowered) by the dimension Hu with respect to the upper outer punch 145. The upper punch 141 is then at a height where the lower end of the upper inner punch 142 comes into contact with the top surface of the powder-like material filled in the cavity 150 immediately before compression.

Fig. 27 shows a state of the initial stage of compression. The transition from the state shown in Fig. 26 to the state shown in Fig. 27 is explained here. During the period of transition, the rear surface of the upper outer punch 145 is lowered to a height where it comes into contact with the top surface of the powder-like material filled in the cavity 150 by the compression force of the upper punch 141 side (upper ram). At this time, while the drive force of the actuator 144 is maintained, the drive force of the actuator 124 is reduced and the lower inner punch 122 is lowered following the pressing force by which the upper inner punch 142 presses the powder-like material filled in the cavity 150 downward.

This brings about a state in which, as shown in Fig. 27, the upper inner punch 142 is at a position where it projects (lowers) from the top surface of the powder-like material filled in the cavity 150 by the dimension Hu and on the other hand, the lower inner punch 122 is at a position where it projects (rises) from the bottom surface of the powder-like material filled in the cavity 150 by the dimension HI.

In other words, the state of the upper punch 141 (the amount of projection of the upper inner punch 142 with respect to the upper outer punch 145: Hu) on the top surface side of the powder-like material filled in the cavity 150 matches with the state of the lower punch 121 (the amount of projection of the lower inner punch 122 with respect to the lower outer punch 125: Hl) on the rear surface side of the powder-like material filled in the cavity 150.

From this state, the compression process of the powder-like material by the compression force of the upper punch 141 side (upper ram) substantially starts. In this compression process, the surrounding part 4 area is compression-molded by directly receiving the compression force of the upper ram and on the other hand, the lower inner punch 122 of the flow passage groove part 2 and 6 areas is compression-molded while lowering (retracting) and the upper inner punch 142 is compression-molded while relatively rising.

Fig. 28 shows a state of completion of compression. The lower inner punch 122 is at the lower limit position, that is, in the same plane (or at a prescribed position) with the lower outer punch 125 by the press compression force of the upper ram, which is larger than the holding force by the actuator 124. The upper inner punch 142 is at the upper limit position, that is, in the same plane (or at a prescribed position) with the upper outer punch 145 by the press compression force of the upper ram, which is larger than the holding force by the actuator 144. As a result, the bipolar plate 1 is formed.

In the manufacturing process using the molding die 110 according to the present invention, the process for removing the molded product is the same as that in the first embodiment, and therefore illustrations and explanations thereof will be omitted. In other words, in the process for removing the molded product, see Fig. 10 for the state immediately before removal, see Fig. 11 for the state in which the flow passage groove part is pulled out, see Fig. 12 for the state in which the die has lowered, and see Fig. 13 for the state of completion of die opening for understanding. If the Fig. 10 to Fig. 13 are referred to using reference numerals, each of which is a reference numeral 100 is added, understanding thereof is made much easier.

When the fuel cell bipolar plate 1 is manufactured using the molding die 110 according to the second embodiment, the uniformity in the density of the bipolar plate 1 can further be improved compared to when the fuel cell bipolar plate 1 is manufactured using the molding die 10 according to the first embodiment.

### Second example

The molding process of the fuel cell bipolar plate compression-molded by the manufacturing method according to the present invention using the molding die 110 of the second embodiment is explained below specifically. Note that the present invention is not limited to the examples.

(1) The bipolar plate 1 has a shape with a length of 150 mm, a width of 100 mm, and a thickness of 2 mm (or 2.5 mm) and the flow passage groove 3 has a width of 1 mm, a depth of 0.5 mm, and a pitch of 2 mm in 12 columns, and is arranged in the center of each of the front and rear surfaces.

(2) The powder-like material includes 80 wt% spherical natural graphite (or similar artificial graphite) with 0.15% ash content and an average particle diameter φ of 30 µm, and as a resin base binder, a mixture of 20 wt% resole type phenol is used. The bulk density is 0.65 g/cm³.

(3) As a compression molding device, an upper ram lowering type 400 ton hydraulic press is used. The die 130, the upper outer punch 145, the upper inner punch 142, the lower outer punch 125, and the lower inner punch 122 operate by a cylinder using a hydraulic pressure provided in a die set as a drive source and the operation stroke is determined by a stroke end block provided in the die set.

As to the operation timing of each die, the position in the upper ram stroke is detected with a linear gauge and hydraulic valves are switched by sequence control triggered by the voltage signal and thus each operation is controlled.

(4) A density of 1.95 g/cm³ by which the performance as the bipolar plate 1 can be obtained as a target, the reference compression ratio is set to 3 because the bulk density of the powder-like material is 0.65 g/cm³. The amount of material to be filled in the surrounding part 4 area of the bipolar plate 1 is then set to 6 mm calculated from 2 mmx3.

Because it is necessary in the areas of the flow passage groove part 2 and 6 to reduce the front surface side flow passage groove part 2 by 0.9 mm and also the rear surface side flow passage groove part 2 by 0.9 mm so that the ratio between the cross sectional area of the bipolar plate 1 and the cross sectional area of the space of the cavity 150 is 1:3, the amount of projection (the amount of lowering) of the upper inner punch 142 with respect to the upper outer punch 145 is set to 0.9 mm and on the other hand, the amount of projection (the amount of rise) of the lower inner punch 122 with respect to the lower outer punch 125 is also set to 0.9 mm.

The amount of projection, 0.9 mm, of the upper inner punch 142 is added and the lower inner punch 122 is projected by a total of 1.8 mm, thereby the amount of material to be filled in the flow passage groove 2 area is set to 4.2 mm calculated from 6 mm-1.8 mm.

The die is heated to 60°C in order to improve flowability and compressed for 15 seconds under a load of 125 tons by the hydraulic press device.

(6) After the compression molding is completed, the hydraulic valve is opened so that the upper outer punch 145 and the lower outer punch 125 operate in the direction of pushing out the bipolar plate 1. At the same time, air for die release is blown out from the division part of each of the outer punches 145 and 125 and each of the inner punches 142 and 122.

With this state being held, if the press upper ram is raised by 1 mm, the upper outer punch 145 and the lower outer punch 124 the operation stroke of which is set to 0.5 mm, respectively, remains in the state in which they sandwich the bipolar plate 1 and the upper inner punch 142 and the lower inner punch 122 are pulled out from the flow passage groove part 2 of the bipolar plate 1.

Immediately after that, the die 130 is lowered by the hydraulic drive and the peripheral part of the bipolar plate 1 is pulled out. After that, the upper ram is raised and the removal of the bipolar plate 1 is completed.

(7) In the present example also, the change in the cavity pressure as shown in Fig. 14, as in the first example, can be obtained and the pressured states of the surrounding part 4 area and the flow passage groove part 2 and 6 areas are substantially the same. In the respective areas, the density of the surrounding part is 1.97 g/cm³ and that of the flow passage groove part is 1.95 g/cm³, indicating a uniform quality.

The shape of product as shown in Fig. 15 is obtained and it can be seen that the shape of the die is transferred with precision and the removal of product is natural and smooth.

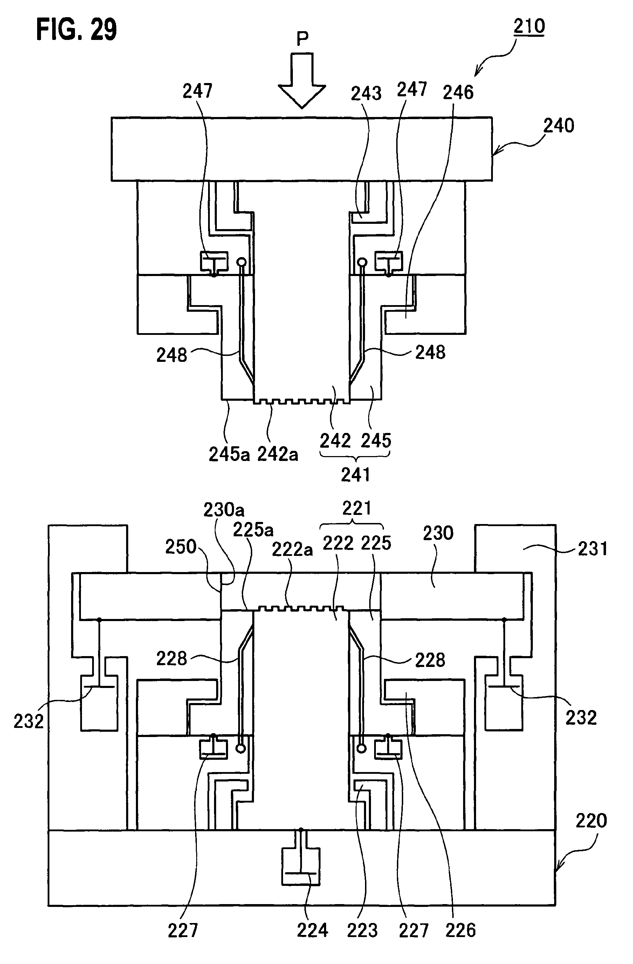

Fig. 29 is a longitudinal sectional view showing a third embodiment of the molding die used in the manufacturing method of the fuel cell bipolar plate 1 according to the present invention and a molding die 210 is substantially the same as the molding die 10 shown in Fig. 3, and therefore, like parts are shown by reference numerals, which are the reference numerals used in Fig. 3 added by 200, respectively, and detailed explanations of each part will be omitted.

The molding die 210 differs from the molding die 10 shown in Fig. 3 in that a diamond-like carbon (DLC) process is performed to form a DLC film on a cavity 250 side that comes into contact with the bipolar plate 1, that is, the cavity side surfaces of a lower inner punch 222 and a lower outer punch 225, the cavity side surface of a die 230, and the cavity side surfaces of an upper inner punch 242 and an upper outer punch 245 in order to ensure the excellent mold releasability after the fuel cell bipolar plate 1 is molded.

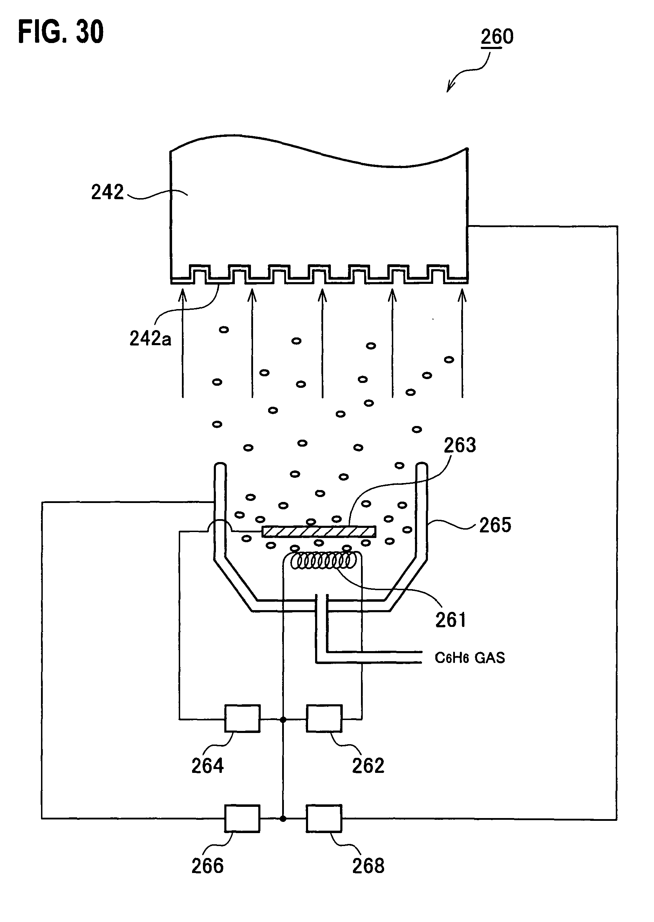

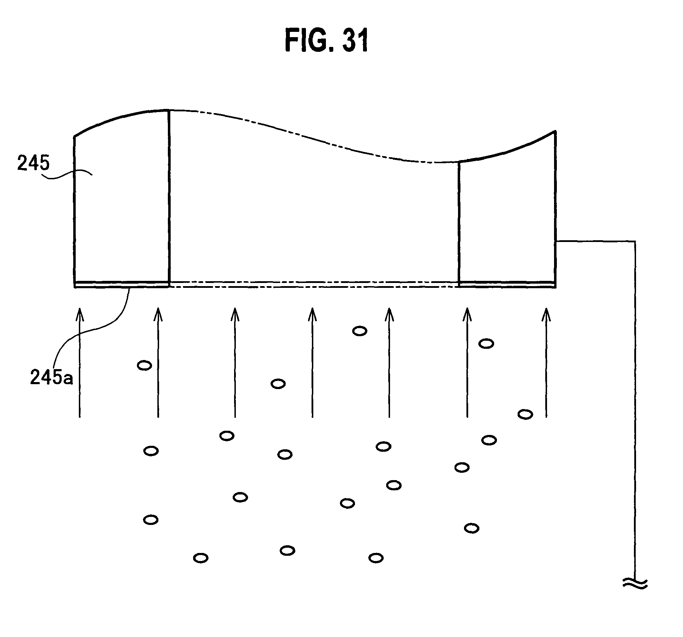

Fig. 30 and Fig. 31 show a method of forming a DLC film on the cavity side surfaces of the upper inner punch 242 and the upper outer punch 245 using the ionized deposition method as an example of the DLC film formation method.

The ionized deposition method shown in Fig. 30 is a PVD method in which benzen (C₆H₆) vaporized as a raw material of hydrocarbon gas is used and as a plasma source, a direct current ion source with a three-polar structure including a thermal filament, anode, and reflector is used.

Accordingly, a DLC film forming device 260 includes a filament 261 and a filament power source 262, an anode 263 and an anode power source 264, a reflector 265 and a reflector power source 266, and a bias power source 268 for the upper inner punch 242 (Fig. 30) or the upper outer punch 245 (Fig. 31), as an object.

Using the DLC film forming device 260, a DLC film 242a can be formed on the cavity side surface of the upper inner punch 242 by decomposing the hydrocarbon gas with arc discharge plasma in a high vacuum and electrically accelerating ions and excited molecules in the plasma to cause them to collide with the cavity side surface (Fig. 30) of the upper inner punch 242.

Similarly, a DLC film 245a can be formed on the cavity side surface (Fig. 31) of the upper outer punch 245.

Similarly, it is possible to form a DLC film 222a on the cavity side surface of the lower inner punch 222, a DLC film 225a on the cavity side surface of the lower outer punch 225, and a DLC film 230a on the cavity side surface of the die 230 (see Fig. 29).

Because these DLC films 222a, 225a, 230a, 242a, and 245a have a fine amorphous structure, their surfaces are very smooth and characterized by excellent abrasion resistance, a low coefficient of friction, excellent mold releasability, etc. The film thickness is 1 to 1.5 µm and the hardness is HV3000 to 4000.

In the manufacturing process of the fuel cell bipolar plate 1 using the molding die 210, the filling and compression processes are carried out the procedure in the order the state before filling adjustment (see Fig. 6), the state after filling adjustment and immediately before compression (see Fig. 7), the state in the middle of compression process (see Fig. 8), and the state after completion of compression (see Fig. 9), as in the case of the molding die 10 shown in Fig. 3.

The process for molded product removal is carried out by the procedure in the order the process before removal (see Fig. 10), the process for pulling out the flow passage groove part (see Fig. 11), the process for pulling out the die (see Fig. 12), and the process for completing product pull-out (see Fig. 13).

In the process for pulling out the flow passage groove part (see Fig. 11) , the die of the flow passage groove part 2 inferior to the surrounding part 4 in mold releasability in terms of shape is pulled out from the bipolar plate 1. In other words, when the upper ram rises in a state in which a force is exerted, by which the upper outer punch 245 and the lower outer punch 225 project toward the bipolar plate 1, a force is exerted so that the upper inner punch 242 is released from the bipolar plate 1 with the upper outer punch 245 as a support point and similarly, the lower inner punch 222 is released from the bipolar plate 1 with the lower outer punch 225 as a support point. When the upper ram rises by a total of the step differences (d₁+d₂) of the flow passage groove 3 on both surfaces of the bipolar plate 1, the flow passage groove 3 on both surfaces of the bipolar plate 1 is released from the die.

At this time, because the DLC film 242a excellent in mold releasability is formed on the cavity side surface of the upper inner punch 242, the flow passage groove part 2 on the front surface of the bipolar plate 1 and the upper inner punch 242 can be released smoothly despite the shape that can make die release difficult.

Similarly, because the DLC film 222a excellent in mold releasability is formed on the cavity side surface of the lower inner punch 222, the flow passage groove part 2 on the rear surface of the bipolar plate 1 and the lower inner punch 222 can be released smoothly despite the shape that can make die release difficult.

In the process for pulling out the die (see Fig. 12), because the DLC film 230a excellent in mold releasability is formed on the cavity side surface of the die 230, when the die 230 is lowered, a smooth die release is possible despite the action of the internal stress on the contact surface between the peripheral surface of the bipolar plate 1 and the die 230.

According to the molding die 210, when manufacturing a bipolar plate by compression molding using a powder-like material with a high graphite content and poor in flowability, it is possible to make equal the density balance between the gas flow passage groove part area and the surrounding part area on the bipolar plate surface, to improve the mold releasability, and to obtain a bipolar plate of high quality and high productivity by suppressing deformation, warpage, and cracking from occurring when the product is removed from the die.

It is also possible to realize an excellent mold releasability without changes in shape of the product and a considerable increase in costs, which are necessary when measures are taken, such that the pull-out gradient of the die is increased, that an eject pin is provided additionally, that a die-release agent is applied, etc., in order to improve the mold releasability of the product.

In the above embodiment, in order to ensure the excellent mold releasability after the fuel cell bipolar plate 1 is molded, the processes for forming the DLC films 222a, 225a, 230a, 242a, and 245a are performed on all of the cavity side surfaces in contact with the bipolar plate 1 of the molding die 210, however, the present invention is not limited to the above.

In other words, it is preferable to form the DLC film 242a at least on the cavity side surface of the upper inner punch 242, the die release of which is difficult because of its shape, because the bipolar plate 1, which is the molded product, is left on the lower punch (lower die) 221 side. In addition, it is preferable to form the DLC film 245a also on the cavity side surface of the upper outer punch 245.

Further in addition, it is also preferable to form the DLC film 222a on the cavity side surface of the lower inner punch 222, the die release of which is difficult because of its shape.

In any of the cases, it is desirable to improve the mold releasability by performing appropriate surface treatment with, for example a TiC film, on the part of the cavity side surface in contact with the bipolar plate 1 of the molding die 210, on which no process for forming a DLC film is performed.

As a hard film described above, a nitride film including, for example, TiN, SiN, CrN, Cr₂N, etc., or a carbide film including TiC, SiC, VC, B₄C, etc. , can be used in addition to the DLC film. Because these nitride film and carbide film are excellent in close adhesion with a steel product, it is also possible to form a thin film layer excellent in close adhesion as a first layer and form a DLC film thereon as a second layer.

As a method of forming a film (a method of forming a thin film), publicly know methods of forming a thin film such as, vacuum deposition, sputtering, ionized beam deposition, ion plating, chemical deposition, etc., can be used.

The process for forming a film excellent in mold releasability can be applied similarly to the molding die 110 shown in Fig. 22, in addition to the application to the molding die 10 shown in Fig. 3.

### INDUSTRIAL APPLICABILITY

According to the present invention, a configuration is adopted, in which the inner die is positioned at a prescribed height above the outer die so that the compression ratio of the flow passage groove part and the compression ratio of the surrounding part are equal when the cavity formed between the upper die and the lower die divided into the inner die corresponding to the flow passage groove part and the outer die corresponding to the surrounding part is filled with the powder-like material, and therefore, it is possible to set the compression ratio of the surrounding part area of the bipolar plate equal to that of the flow passage groove part area and therefore to manufacture a bipolar plate with an equal density.

According to the present invention, a configuration is adopted, in which the outer die is projected with respect to the inner die so that the flow passage groove part is released preceding to the surrounding part at the time of die opening for molded product removal after the compression molding carried out by one of the dies and the other in opposition to the one surface and divided into the inner die corresponding to the flow passage groove part and the outer die corresponding to the surrounding part, and therefore, it is possible to release the flow passage groove part area preceding to the spring back occurs at the time of bipolar plate removal and therefore to manufacture a bipolar plate without any missing in shape.

According to the present invention, because a process for forming a film excellent in mold releasability is performed at least on part of the die surface in contact with the powder-like material, it is possible to manufacture a fuel cell bipolar plate excellent in mold releasability and of high quality and high productivity by suppressing deformation, warpage, and cracking from occurring.

## Claims

1. A molding die for compression-molding a fuel cell bipolar plate, wherein the fuel cell bipolar plate has a flow passage groove portion and a surrounding portion on at least one surface thereof and is made of a powder-like material, comprising:
a lower die, in opposition to said one surface, divided into an inner die corresponding to said flow passage groove portion and an outer die corresponding to said surrounding portion; and
an actuating member advancing and retracting said inner die and/or said outer die.

2. The molding die according to claim 1, wherein a process for forming a film excellent in mold releasability is performed on at least a part of said surface of the molding die.

3. A molding die for compression-molding a fuel cell bipolar plate, wherein the fuel cell bipolar plate has a flow passage groove portion and a surrounding portion on each of the front and rear surfaces and is made of a powder-like material, comprising:
an upper die being divided into an upper inner die corresponding to said flow passage groove portion and an upper outer die corresponding to said surrounding portion;
an lower die being divided into a lower inner die corresponding to said flow passage groove portion and a lower outer die corresponding to said surrounding portion; either of the upper die or the lower die being actuated by a ram pressure,
a frame body forming the periphery of a cavity between said upper die and said lower die;
an actuating member advancing and retracting said upper outer die with respect to said upper inner die; and
an actuating member advancing and retracting said lower inner die and said lower outer die reciprocally.

4. The molding die according to claim 3, further comprising an actuating member advancing and retracting said upper inner die with respect to said upper outer die.

5. The molding die according to claim 3, wherein
an actuating force projecting said lower inner die with respect to said lower outer die, by said actuating member advancing and retracting said lower inner die, is set to a magnitude that substantially cancels out the projection of said lower inner die when a process for compression by said ram pressure is completed.

6. The molding die according to claim 4, wherein
an actuating force projecting said upper inner die with respect to said upper outer die, by said actuating member advancing and retracting said upper inner die, is set to a magnitude that substantially cancels out the projection of said upper inner die when a process for compression by said ram pressure is completed.

7. The molding die according to any one of claims 3 to 6, wherein
a stroke projecting said upper outer die with respect to said upper inner die, by an actuating member advancing and retracting said upper outer die, and a stroke projecting said lower outer die with respect to said lower inner die, by an actuating member advancing and retracting said lower outer die, are set to a dimension substantially the same or greater than a depth of said flow passage groove portion on each of the front and rear surfaces.

8. The molding die according to any one of claims 3 to 7, wherein a process for forming a film excellent in mold releasability is performed on the surface of at least the cavity side of said upper inner die.

9. The molding die according to claim 8, wherein a process for forming a film excellent in mold releasability is performed on the surface of the cavity side of said upper outer die and/or said lower inner die.

10. A manufacturing method of a fuel cell bipolar plate having a flow passage groove portion and a surrounding portion on at least one surface by compression-molding a powder-like material using a die, wherein
an inner die is positioned at a predetermined height above an outer die so that the compression ratio of said flow passage groove portion and the compression ratio of said surrounding portion are equal when a cavity formed between an upper die and a lower die, divided into said inner die corresponding to said flow passage groove portion and said outer die corresponding to said surrounding portion, is filled with a powder-like material.

11. The manufacturing method of a fuel cell bipolar plate according to claim 10, wherein
a difference in height of said inner die from said outer die due to said positioning is canceled out substantially at the same time when a die operation is completed, by gradually reducing the difference during the period of the die operation for compression.

12. A manufacturing method of a fuel cell bipolar plate having a flow passage groove portion and a surrounding portion on at least one surface by compression-molding a powder-like material using a die, wherein
an outer die is projected with respect to an inner die so that said flow passage groove portion is released preceding to said surrounding portion at the time of die opening for molded product removal after the compression molding carried out by one of the dies and the other in opposition to said one surface, divided into said inner die corresponding to said flow passage groove portion and said outer die corresponding to said surrounding portion.

13. A manufacturing method of a fuel cell bipolar plate having a flow passage groove portion and a surrounding portion on at least one surface by compression-molding a powder-like material using a die, wherein
an outer die is projected with respect to an inner die so that said flow passage groove portion is released preceding to said surrounding portion at the time of die opening for molded product removal after the compression molding carried out by one of the dies, the other in opposition to said one surface, divided into said inner die corresponding to said flow passage groove portion and said outer die corresponding to said surrounding portion, and a frame body that forms the periphery of a cavity between both said dies, and wherein said frame body is moved so that the periphery of the molded product is released from said frame body in a state in which said flow passage groove portion is released and said surrounding portion is not released.

14. The manufacturing method of a fuel cell bipolar plate according to claim 12 or 13, wherein
compressed air is blown out from a division surface between said inner die and said outer die for easily releasing said flow passage groove portion, when said outer die is projected with respect to said inner die so that said flow passage groove portion is released preceding to said surrounding portion at the time of die opening.

15. A manufacturing method of a fuel cell bipolar plate having a flow passage groove portion and a surrounding portion on each of the front and rear surfaces by compression-molding a powder-like material using a die, wherein
a lower inner die is positioned at a predetermined height above a lower outer die so that the compression ratio of said flow passage groove portion and the compression ratio of said surrounding portion are equal when a cavity formed between an upper die, divided into an upper inner die corresponding to said flow passage groove portion and an upper outer die corresponding to said surrounding portion, and a lower die, divided into said lower inner die corresponding to said flow passage groove portion and said lower outer die corresponding to said surrounding portion, is filled with a powder-like material, and wherein
a difference in height of said lower inner die from said lower outer die due to said positioning is canceled out substantially at the same time when a die operation is completed by gradually reducing the difference during the period of the die operation for compression.

16. A manufacturing method of a fuel cell bipolar plate having a flow passage groove portion and a surrounding portion on each of the front and rear surfaces by compression-molding a powder-like material using a die, wherein
a lower inner die is first positioned at a predetermined height above a lower outer die so that the compression ratio of said flow passage groove portion and the compression ratio of said surrounding portion are equal when a cavity formed between an upper die, divided into an upper inner die corresponding to said flow passage groove portion and an upper outer die corresponding to said surrounding portion, and a lower die, divided into said lower inner die corresponding to said flow passage groove portion and said lower outer die corresponding to said surrounding portion, is filled with a powder-like material, and wherein
when said upper die, in which said upper inner die is projected downward by a predetermined amount with respect to said upper outer die, is lowered until the lower surface of said upper outer die comes into contact with the top surface of said powder-like material, filled in the cavity in a state in which said positioning has been carried out, said lower inner die is lowered, following the invasion of said upper inner die into said powder-like material, and positioned so that the amount of upward projection of said lower inner die with respect to said lower outer die is equal to the amount of downward projection of said upper inner die with respect to said upper outer die.

17. The manufacturing method of a fuel cell bipolar plate according to claim 16, wherein
the amount of downward projection of said upper inner die with respect to said upper outer die and the amount of upward projection of said lower inner die with respect to said lower outer die due to said positioning are canceled out substantially at the same time when a die operation is completed by gradually reducing the amounts during the period of the die operation for compression.

18. A manufacturing method of a fuel cell bipolar plate having a flow passage groove portion and a surrounding portion on each of the front and rear surfaces by compression-molding a powder-like material using a die, wherein
an upper outer die and an lower outer die are projected with respect to an upper inner die and an lower inner die so that said flow passage groove portion is released preceding to said surrounding portion at the time of die opening for molded product removal after the compression- molding carried out by an upper die, divided into said upper inner die corresponding to said flow passage groove portion and said upper outer die corresponding to said surrounding portion, and a lower die, divided into said lower inner die corresponding to said flow passage groove portion and said lower outer die corresponding to said surrounding portion.

19. The manufacturing method of a fuel cell bipolar plate according to claim 18, wherein
said upper outer die and said lower outer die are projected with respect to said upper inner die and said lower inner die at the time of die opening for molded product removal after the compression-molding carried out by said upper die, said lower die, and a frame body that forms the periphery of a cavity between both said dies, and wherein
said frame body is moved so that the periphery of the molded product is released from said frame body in a state in which said flow passage groove portion on each of the front and rear surfaces is released and said surrounding portion on each of the front and rear surfaces is not released.

20. The manufacturing method of a fuel cell bipolar plate according to claim 18 or 19, wherein
compressed air is blown out from division surfaces between said upper inner die and said lower inner die, and between said upper outer die and said lower outer die, so that said flow passage groove portion on each of the front and rear surfaces is easily released when said upper outer die and said lower outer die are projected with respect to said upper inner die and said lower inner die at the time of said die opening.

21. A fuel cell bipolar plate having a flow passage groove portion and a surrounding portion on at least one surface, wherein
said fuel cell bipolar plate is formed in such a manner that the material density of said flow passage groove portion is substantially equal with that of said surrounding portion.

22. A fuel cell bipolar plate having a flow passage groove portion and a surrounding portion on at least one surface, wherein
said fuel cell bipolar plate is compression-molded in such a manner that the compression ratio of said flow passage groove portion and the compression ratio of said surrounding portion are substantially equal by filling a cavity formed by a lower die being divided, in which an inner die corresponding to said flow passage groove portion is positioned at a predetermined height above an outer die corresponding to said surrounding portion, with a powder-like material and canceling out a difference in height between said outer die and said inner die as a process for compression progresses.

23. A fuel cell bipolar plate having a both-surfaces flow passage groove portion, a one-surface flow passage groove portion, and a surrounding portion on the front and rear surfaces, wherein
said fuel cell bipolar plate is formed in such a manner that the material density of said both-surfaces flow passage groove portion, the material density of said one-surface flow passage groove portion, and the material density of said surrounding portion are substantially equal.

24. A fuel cell bipolar plate having a both-surfaces flow passage groove portion, a one-surface flow passage groove portion, and a surrounding portion on the front and rear surfaces, wherein
said fuel cell bipolar plate is compression-molded in such a manner that the compression ratio of said flow passage groove portion and the compression ratio of said surrounding portion are equal by filling a cavity formed by a lower die, in which a lower inner die corresponding to said both-surfaces flow passage groove portion and said one-surface flow passage groove portion is projected upward by a predetermined amount with respect to a lower outer die corresponding to said surrounding portion, and an upper die, in which an upper inner die corresponding to said both-surfaces flow passage groove portion and said one-surface flow passage groove portion is projected downward by a predetermined amount with respect to an upper outer die corresponding to said surrounding portion, with a powder-like material and by canceling out the projection of said lower inner die and said upper inner die as a process for compression progresses.
